# EUROPÄISCHE PATENTANMELDUNG

(11) **EP 4 512 709 A1**
(43) Veröffentlichungstag der Anmeldung: **26.02.2025**
(21) Anmeldenummer: 24190518.1
(22) Anmeldetag: 24.07.2024
(51) Int. Cl.: B62M 11/06, B62M 25/08, B62J 45/40

(54) **GETRIEBEEINHEIT MIT SCHALTVORRICHTUNG FÜR EIN FAHRRAD**

(30) Priorität: 09.08.2023 DE 102023121281
(71) Anmelder: Nicolai, Karlheinz, 31089 Duingen Lübbrechtsen (DE)
(72) Erfinder: Nicolai, Karlheinz, 31089 Duingen Lübbrechtsen (DE)
(74) Vertreter: Grünecker Patent- und Rechtsanwälte PartG mbB

(57) **Zusammenfassung**

Die Erfindung betrifft eine Getriebeeinheit (4) mit einer Schaltvorrichtung (68) für ein Fahrrad (1) mit oder ohne Hilfsantrieb (2), mit mehreren Teilgetrieben (TGi) die in Reihe geschaltet sind. Die unterschiedlichen Teilgetriebe (TG1, TG2) besitzen Wellen (44,57), auf denen Losräder (49, 58) gelagert sind und Kupplungseinrichtungen (52,62) mit Hilfe Betätigungseinrichtungen (51, 61) und Aktuatoren (50, 60) mit den jeweiligen Wellen (44, 57) verbunden werden können. Ebenso können sich andere Zahnräder (48, 55) mit Freiläufen (F1, F2) mit anderen Wellen (46) verbinden. Auf diese Weise werden Gangstufen in Betrieb gesetzt. Die Getriebeeinheit (4) ist dadurch gekennzeichnet, dass mindestens zwei Betätigungseinrichtungen (51, 61) als Teil der Schaltvorrichtung (68) mit mindestens einem elektrisch betriebenen Aktuator (50) in Verbindung stehen und die Schaltvorrichtung (68) innerhalb von ausgewählten Zeiträumen und Randbedingungen die Betätigungseinrichtungen (51, 61) in unterschiedlicher Weise bewegt, um Gangwechsel zu vollziehen. Zusätzlich ist eine Betätigungseinrichtung (51, 61) mit einer Sensoreinrichtung (75) verbunden, wobei die Sensoreinrichtung (75) ausgestaltet ist, Signale an eine Datenverarbeitungsvorrichtung (82) zu übergeben, die repräsentativ sind für einen momentanen Zustand der Betätigungseinrichtungen (51, 61). Ebenso ist die Datenverarbeitungsvorrichtung (82) mit mindestens einem Aktuator (50) verbunden und in der Lage, elektrische Signale mit dem Aktuator (50) auszutauschen. Dabei ist die Datenverarbeitungsvorrichtung (82) zusätzlich mit einem Bedienelement (3) verbunden, wobei das Bedienelement (3) ausgestaltet ist, um Befehle vom Fahrradfahrer zu erhalten.

## Beschreibung

Die Erfindung betrifft eine Getriebeeinheit mit Schaltvorrichtung für ein Fahrrad sowie ein Fahrrad mit einer solchen Schaltvorrichtung für eine Getriebeeinheit.

Wenn im Rahmen der folgenden Beschreibung von einer Getriebeeinheit mit Schaltvorrichtung die Rede ist, so ist in gleicher Weise damit eine Schaltvorrichtung für eine Getriebeeinheit gemeint.

Fahrräder weisen optional auch einen Hilfsantrieb auf, der die Tretbewegung eines Radfahrers unterstützt. Diese Fahrräder werden dann auch Elektrofahrräder genannt. Eine Gangschaltung sorgt beim Fahrrad dafür, dass über einen weiten Geschwindigkeitsbereich mit etwa gleichbleibender Trittfrequenz pedaliert werden kann.

Der Hilfsantrieb sitzt bei den hier betrachteten Elektrofahrrädern in der Nähe des Tretlagers. Bei dieser Konfiguration kommen üblicherweise Kettenschaltungen oder Nabenschaltungen zum Einsatz, weil am Tretlager nicht ausreichend Platz zur Verfügung steht. Kettenschaltungen sind jedoch insofern nachteilig, als die Komponenten der Gangschaltung, nämlich die Ritzel an der Hinternabe, das wenigstens eine Kettenblatt sowie die Kette nebst Kettenumwerfer ungeschützt sind und daher leicht verschmutzen. Eine Kettenschaltung ist daher vergleichsweise wartungsintensiv.

Nabenschaltungen werden anstelle von oder zusammen mit Kettenschaltungen am Hinterrad verwendet. Die Nabenschaltungen sind von der Außenumgebung abgekapselt in einem Gehäuse angeordnet und daher weitgehend wartungsfrei. Nachteilig ist jedoch bei Nabenschaltungen das hohe Gewicht am Hinterrad, das zu einer ungünstigen Gewichtsverteilung führt. Nicht nur beim Tragen, sondern auch bei Kurvenfahrten oder bei sportlicher Fahrt im Gelände ist das hohe Gewicht an der Hinterradnabe störend.

Eine deutlich vorteilhaftere Gewichtsverteilung ergibt sich, wenn die Gangschaltung mittig im Fahrrad positioniert ist, wie dies beispielsweise bei Tretlagerschaltungen der Fall ist. Allerdings sind Tretlagerschaltungen recht groß, so dass um das Tretlager herum kein Platz für den Elektromotor als Hilfsantrieb bleibt. Zudem sind die Tretlagerschaltungen von sich aus bereits so schwer, dass das zusätzliche Gewicht eines Hilfsantriebs zu einem Elektrofahrrad führen würde, das für den Alltag oder für die Weiterfahrt bei leerer Batterie zu schwer wäre.

Als übergeordnete Bezeichnung für Tretlagerschaltungen und Nabenschaltungen wird der Begriff der Getriebeeinheiten benutzt. Ebenfalls kann man eine Tretlagerschaltung mit einer Nabenschaltung kombinieren, falls man die Anzahl der möglichen Gangstufen weiter erhöhen möchte. Aus diese Kombination ist als Getriebeeinheit zu bezeichnen.

Es ist aus der DE19750659A1 und der US2011/0120794A1 ein Schaltgetriebe mit Hilfsantrieb bekannt, welches in der Nähe des Tretlager angeordnet ist. Diese Konstruktionen sind leider relativ groß und schwer, was als nachteilig zu werten ist. Ein weiterer Nachteil dieser Konstruktionen ist, dass ein Gangwechsel unter Last ohne Unterbrechung der Tretbewegung nicht möglich ist.

Im Laufe der Jahre wurden Tretlagerschaltungen Fahrräder immer weiter entwickelt. In Bezug auf Baugröße und Gewicht ist ein Aufbau des Schaltgetriebes gemäß EP1445088A2 vorteilhaft. Hierbei handelt es sich um eine Getriebeeinheit eines mit Muskelkraft betriebenen Fahrzeugs, mit einer ersten Welle, die meist parallel zur Tretlagerwelle angeordnet ist und an der eine Mehrzahl von Losrädern gelagert sind, und einer entsprechenden Anzahl von Zahnrädern, die an wenigstens einer zweiten Welle gelagert sind, wobei die Losräder jeweils mittels Kupplungsmitteln mit der ersten Welle verbindbar sind, wobei die erste Welle als Hohlwelle ausgebildet ist und einen oder zwei koaxial innenliegende Schaltbolzen aufweist, dadurch gekennzeichnet, dass der oder die Schaltbolzen mit Antriebsmitteln verbunden ist oder sind, die dazu ausgelegt sind, den oder die Schaltbolzen axial zur Betätigung zu verschieben. Die erste Welle wird auch oft Schaltwelle genannt. Die Kupplungsmittel, auch oft Schaltkupplungen oder Schaltmittel genannt, sind hierbei als formschlüssige Freiläufe ausgeführt und befinden sich auf axial verschiebbaren Schaltbolzen angeordnet. Es sind somit Freilaufkörper auf den Schaltbolzen angeordnet.

Ein Drehmoment, welches vom Fahrradfahrer auf das Getriebe während der Fahrt und auch während des Schaltvorgangs eingeleitet wird, muss von der Welle über die Kupplungsmittel in das jeweilige Zahnrad geleitet werden. Ein Schalten unter Last ist bei dieser Art von Schaltgetrieben sehr schlecht möglich, da die axiale Bewegung des Kupplungsmittels umso schwerer geht, je mehr Drehmoment durch den Fahrer eingeleitet wird. Die Ursache ist die erhöhte Flächenpressung zwischen den kraftübertragenen Bauteilen.

Die Betätigungsmittel sind beim Schalten unter Last aufgrund der erhöhten Flächenpressung nicht mehr in der Lage, die Kupplungsmittel zu bewegen. Die Schaltkraft ist die Kraft, die das Betätigungsmittel aufbringen muss, um die Kupplungsmittel zu bewegen. Die Summe aller Betätigungsmittel und ihr funktionales Zusammenspiel wird auch Betätigungseinrichtung genannt. Die Summe aller Kupplungsmittel und ihr funktionales Zusammenspiel wird auch Kupplungseinrichtung genannt.

Betrachtet man die EP 2 379 402 B2, so kann hier jedes einzelne Losrad mit Hilfe von jeweils einem Freilaufzahn, welcher auf der Schaltwelle beweglich angeordnet ist, zur Schaltwelle eingekuppelt werden. Die Freilaufzähne werden durch Federn ständig in Richtung die Kupplungsverzahnungen der Losräder gedrückt. Die Geometrie der Freilaufzähne ist so gewählt, dass sie betriebssicher unter Last in der Kupplungsverzahnung des Losrades eingekuppelt verbleiben und während des Betriebs keine Reaktionskraft in Richtung des Betätigungsmittels entsteht. Das Betätigungsmittel, welches in dieser Konstruktion innerhalb der Schaltwelle als Nockenwelle rotiert, muss beim Schalten unter Last den relevanten Freilaufzahn aus seinem Formschluß lösen und hierbei enorme Reibkräfte überwinden. Auch hier erhöht sich die Schaltkraft, wenn durch den Benutzer ein erhöhtes Drehmoment über die Pedalen in die Tretlagerwelle eingespeist wird. Diese Schaltkraft ist noch weiter erhöht, wenn das Fahrrad einen Hilfsantrieb am Tretlager besitzt. Da diese Getriebe nach dem Stand der Technik meist zwei Teilgetriebe besitzen, die in Reihe geschaltet sind, müssen unterschiedliche Betätigungseinrichtungen ebenfalls unterschiedliche Kupplungseinrichtungen in beiden Teilgetrieben gleichzeitig einkuppeln, um bestimmte Gangstufen einzulegen. Das schnelle und zeitgleiche synchrone Einlegen von unterschiedlichen Kupplungen aus unterschiedlichen Teilgetrieben mit Betätigungseinrichtungen gemäß dem Stand der Technik ist oft nicht fehlerfrei möglich. Innerhalb der Schaltgetriebe nach dem Stand der Technik treten immer wieder Situationen auf, in welchen innerhalb von einem kleinen Zeitfenster innerhalb des Schaltvorgangs ein zu großer oder zu kleiner Gang eingelegt ist. Dieser Nachteil wird im Folgenden als Synchronisationsfehler bezeichnet.

Betrachtet man die Patentschrift DE 102013112788 B4 oder die US 10526044 B2, so wird hier das Schaltverhalten unter Last zwar durch eine optimierte Gestalt der gesamten Betätigungseinrichtung zwar verbessert, der Umstand, dass die Reibkräfte zwischen den Freilaufzähnen und der Innenverzahnung der Losräder dennoch vollständig durch die Betätigungseinrichtung überwunden werden müssen, ist als Nachteil dieser Ausführung zu werten.

Man erkennt in diesen oben angeführten Konstruktionen nach dem Stand der Technik, dass nur sehr wenig Bauraum für die Kupplungseinrichtung und die Betätigungseinrichtung zur Verfügung steht. Eine Kupplungseinrichtung, die unter Last schalten kann, ist bei begrenztem Bauraum schlecht umsetzbar. Es besteht also u.A. Bedarf an einer Tretlagerschaltung mit Schaltvorrichtung mit genügend Bauraum für Kupplungen, die unter Last zeitsynchron sehr schnell und präzise schalten können.

Die Betätigungseinrichtung als Teil der Schaltvorrichtung wird meist nach dem Stand der Technik durch die menschliche Hand am Lenker des Fahrrades betätigt. In neuartigen Ausführungen nach dem Stand der Technik ist auch eine Betätigung durch elektrische Aktuatoren üblich. Da die menschliche Hand und auch kleine Elektromotoren, wie sie heute innerhalb von Aktuatoren Verwendung finden, nur eine begrenzte mechanische Arbeit erbringen können, besteht also u.A. Bedarf an einer Schaltvorrichtung für eine Getriebeeinheit mit genügend Bauraum für große, starke und schnelle Aktuatoren. Diese größeren Aktuatoren sollten in der Lage sein, die Kräfte zu erzeugen, die notwendig sind, unter Last die Kupplungseinrichtungen mit Hilfe der Betätigungseinrichtung zu bewegen. Als Aktuator werden an dieser Stelle antriebstechnische Baueinheiten bezeichnet, die ein Signal, meist von einer Datenverarbeitungsvorrichtung ausgegeben, in eine mechanische Bewegung umsetzen können.

Beim Radfahren darf es während eines Gangwechsels niemals zu einem Durchrutschen der Pedalen kommen. Der Fahrradfahrer darf nicht plötzlich "ins Leere" treten. Hierdurch können Verletzungen, besonders im Kniebereich, auftreten. Viele Getriebe nach dem Stand der Technik sind bereits so aufgebaut, dass kein Leerlauf zwischen einzelnen Gängen während des Gangwechsels auftreten kann.

Beispielhaft sei an dieser Stelle die Patentschrift DE 102004045364.0 angeführt. Die Kupplungseinrichtungen besitzen eine Freilauffunktion und sind von außen durch eine Betätigungseinrichtung ansteuerbar. Dieses Tretlagergetriebe ist dadurch gekennzeichnet, daß sich während des Schaltvorganges der Zustand von mindestens zwei Kupplungsmitteln gleichzeitig ändert. Die Änderung des Zustands der Kupplungsmittel innerhalb des Schaltvorgangs so zu steuern, daß kein Leerlauf eintritt, wird so erreicht.

Ein weiteres Beispiel für eine gute Ausführung kann aus der Patentschrift WO 2009/132605 A1 entnommen werden. Auch diese Ausführung besitzt viele Losräder, die nebeneinander auf einer Welle gelagert sind und sich mit Hilfe von schaltbaren Freiläufen mit der Welle verbinden lassen. Damit es in keiner Situation zu einem Durchrutschen kommen kann, gibt es zwischen 2 Gängen innerhalb des Schaltvorgangs immer einen bestimmten Zeitraum, in welchem zwei Freilaufkörper betätigt sind und aktiv in Innenverzahnungen der Losräder gedrückt werden und somit in eine Drehrichtung dafür sorgen, daß eines von den zwei relevanten Losrädem Drehmoment auf die Welle übertragen kann.

Die meisten schaltbaren Freiläufe nach dem Stand der Technik arbeiten formschlüssig und besitzen deswegen nur bestimmtes Increment, unter dem die Freiläufklinken und -klauen einkuppeln können. Betrachtet man z.B die Patentanmeldung DE 102022001739.3, so erkennt man, das ein Freilaufzahn beispielsweise nur in 18 verschiedenen Positionen über dem Umfang der Kupplungsnabe einkuppeln kann. Das bedeutet, dass eine beispielhafte Kupplungseinrichtung im Moment des Einkuppelns einen Leerweg von bis zu 20 Grad haben kann. Dieser Nachteil sei im Folgenden als das Problem des Durchsackens bezeichnet.

Betrachtet man Getriebe nach dem Stand der Technik wie zum Beispiel in der Patentschrift EP 1982913A1 dargestellt, so werden auch hier die Kupplungseinrichtungen durch Rotation des Betätigungsmittels angesteuert. Da sich das Betätigungsmittel als Teil der Betätigungseinrichtung an einer Welle befindet, die während der Fahrt rotiert, muß der Schaltbefehl mit Hilfe eines Überlagerungsgetriebes vom stehenden Gehäuse auf die rotierende Welle übertragen werden. Falls das Überlagerungsgetriebe, welches meist als Planetengetriebe ausgestaltet ist und ebenfalls einen Teil der Betätigungseinrichtung bildet, sich gemäß dem Stand der Technik koaxial und seitlich neben der Schaltwelle befindet, vergrößert sich die Baubreite des Getriebes in nachteilhafter Weise.

Der Q-Faktor beim Fahrrad bestimmt die Standbreite und bezeichnet den seitlichen Abstand der Montagepunkte der Pedale an den Kurbeln. Falls das Getriebegehäuse eine bestimmte Baubreite überschreitet, wird der Q-Faktor zu groß und das hat ergonomische und biomechanische Nachteile.

Es besteht also u.A. Bedarf an einer Tretlagerschaltung mit einer Schaltvorrichtung innerhalb eines schmalen Getriebegehäuses. Es sei an dieser Stelle nochmals zusammengefasst, dass die Schaltvorrichtung mindestens das Bedienelement, den Aktuator, die Betätigungseinrichtung sowie die Kupplungseinrichtung beinhaltet.

Gut erkennbar ist ein solcher Aufbau beispielhaft in Figur 1 in der Patentschrift US 5924950 oder in der Figur 8 aus der EP 1445088A2 dargestellt. In diesem Fall verfügen diese Getriebe über mehrere Betätigungseinrichtungen die durch den Benutzer im Fall von bestimmten Gangwechseln gleichzeitig angesteuert werden müssen. Die Notwendigkeit einer zweifachen Bedienung der Betätigungseinrichtungen durch den Benutzer des Fahrrades ist nachteilig. Es wäre eine Schaltvorrichtung vorteilhaft, die dieses Problem löst.

Der Benutzer möchte nur einen Bedienbefehl auslösen, um von einen Gang in einen anderen Gang zu wechseln. Um diese Funktion innerhalb einer Betätigungseinrichtung umzusetzen, sind dem Fachmann zum Beispiel die sogenannten Schrittschaltgetriebe bekannt. Hier wird zum Beispiel eine mechanische Eingangsbewegung in zwei Ausgangsbewegungen mit unterschiedlichem Takt aufgeteilt. Ein axial besonders platzsparendes Schrittschaltgetriebe von Siemens ist beispielsweise aus der Patentschrift DE1113618 bekannt. Auch ein solches Schrittschaltgetriebe kann Teil einer Betätigungseinrichtung sein. In einem solchen Aufbau kann zum Beispiel eine Betätigungseinrichtung zwei unterschiedliche Kupplungseinrichtungen ansteuern.

Betätigungseinrichtungen, die mehrere Kupplungseinrichtungen mit Hilfe von Schrittschaltgetrieben gleichzeitig ansteuern, sind beispielsweise aus den Patentschriften FR2776613A1, DE102009060484B4 oder DE000019720794A1 bekannt. In den genannten Ausführungen steht jedoch meist für das Schrittschaltgetriebe nur ein begrenzter Bauraum zur Verfügung, sodass auch nur eine begrenzte Schaltkraft übertragen werden kann. Zusätzlich ist nachteilig, dass solche Schrittschaltgetriebe komplex aufgebaut und kostenintensiv in der Fertigung sind.

Elektrofahrräder ohne Tretlagerschaltung nach dem Stand der Technik besitzen in ihrem Gehäuse genügend Bauraum, um einen technologisch benötigten Drehmomentsensor und einen Drehzahlsensor unterzubringen. Die Summe aller Sensoren und elektronischen Bauteile, die innerhalb eines Elektrofahrrads mit Hilfsantrieb, insbesondere in Form eines Mittelmotors, verwendet werden, um Signale zu erzeugen, die für die Steuerung oder Regelung des Motors und der Gangschaltung in der vom Benutzer gewünschten Weise erforderlich sind, seien im folgenden als Sensoranordnung bezeichnet.

Um die oben beschriebenen Probleme der Integration einer vorteilhaften Getriebeeinheit in ein Elektrofahrrads mit Hilfsantrieb, insbesondere in Form eines Mittelmotors mit Tretlagergetriebe, zu lösen, bedarf es unter anderem eines sehr leicht und bauenden Getriebes mit einer schmalen Sensoranordnung. Die Zahnräder innerhalb des Getriebes, die auf der einen Seite die Drehzahl des Elektromotors reduzieren und die Zahnräder, die als Antriebs-, Abtriebs- und Losräder für die Schaltfunktion verantwortlich sind, sollen im folgenden als Zahnradanordnung bezeichnet werden müssen ebenfalls zusammen mit der Sensoranordnung in dem begrenzten Bauraum untergebracht werden. Dieser Bauraum wird jedoch ebenfalls für die Schaltvorrichtung und für den elektrischen Hilfsantriebs benötigt.

Es besteht folglich u.A. Bedarf an einer Schaltvorrichtung für eine Getriebeeinheit, wobei die Schaltvorrichtung insbesondere in der Lage sein sollte, die Betätigungseinrichtungen und die Kupplungseinrichtungen in mehreren Getriebestufen schnell, zeitsynchron und auch mit hohen Schaltkräfte eine Vielzahl von Gangstufen beim Schalten unter Last zu betreiben. Der gesamte Bauraum der Tretlagerschaltung sollte zusätzlich jedoch rückwärtig zum Hinterrad möglichst klein sein, damit genug Platz für die Bereifung, eine kurze Kettenstrebenlänge und trotz vollständig integrierter Sensoranordnung ebenfalls genug Platz für Drehpunkte einer optimalen Federungskinematik zur Verfügung steht.

Es besteht also u.A. Bedarf an einer Schaltvorrichtung für Tretlagerschaltungen eines Fahrrades, die so klein, und schmal baut, dass sie optional auch mit einem Hilfsantrieb am Tretlager kombiniert werden kann, nur ein geringes Gewicht aufweist und mit modernen Federungskonstruktionen kompatibel ist. Zusätzlich besteht Bedarf an einer Schaltvorrichtung für Getriebeeinheiten mit verbessertem Lastschaltverhalten, wobei auch die Fertigung der benötigten Bauteile preisgünstig sein sollte.

Es besteht also u.A. Bedarf einer verbesserten Getriebeeinheit für ein Fahrrad, wobei die Sensoranordnung und die Schaltvorrichtung sowie auch die Zahnradanordnung so gestaltet sind, dass insgesamt ein kleines Bauvolumen und eine geringe Masse erreicht wird. Es sollte eine schmale Baubreite erreicht werden, damit die Schaltvorrichtung und die Einkopplung des elektrischen Hilfsantriebs in das Schaltgetriebe ohne Verschlechterung des Q-Faktors in dem zur Verfügung stehenden Bauraum umgesetzt werden kann.

Diese oben beschriebenen Aufgaben werden erfindungsgemäß für die eingangs genannte Getriebeeinheit mit Schaltvorrichtung, insbesondere für ein mit Muskelkraft angetriebenes Fahrzeug, dadurch gelöst, dass die Getriebeeinheit mit einem ersten Teilgetriebe und mindestens einem zweiten Teilgetriebe ausgestaltet ist, wobei die Teilgetriebe zur Kraftübertragung in Reihe geschaltet sind und wobei das erste Teilgetriebe eine Welle aufweist, an der mindestens ein oder eine Mehrzahl von ersten Losrädern gelagert sind, die mit entsprechenden Zahnrädern Radpaare des ersten Teilgetriebes bilden, und wobei die ersten Losräder oder das erste Losrad mittels der ersten Kupplungen oder der ersten Kupplung mit der Welle verbindbar sind, um eine Gangstufen des ersten Teilgetriebes in Betrieb zu setzen, und wobei die ersten Kupplungen oder die erste Kupplung mittelbar oder unmittelbar von einer ersten Betätigungseinrichtung betätigt werden kann und wobei sich innerhalb des ersten Teilgetriebes ein Freilauf befindet, der ein Zahnrad mittelbar oder unmittelbar mit einer der Wellen in eine Richtung drehfest verbindet.

Gelöst wird diese Aufgabe ferner dadurch, dass das wobei das zweite Teilgetriebe eine Welle aufweist, an der mindestens ein oder eine Mehrzahl von zweiten Losrädern gelagert sind, die mit entsprechenden Zahnrädern Radpaare des zweiten Teilgetriebes bilden, und wobei die zweiten Losräder oder das zweite Losrad mittels der zweiten Kupplungen oder der zweiten Kupplung mit der Welle verbindbar sind, um eine Gangstufe des zweiten Teilgetriebes in Betrieb zu setzen. Und wobei die mindestens zweiten Kupplungen oder die mindestens zweite Kupplung mittelbar oder unmittelbar von mindestens einer zweiten Betätigungseinrichtung betätigt werden kann und wobei sich innerhalb des zweiten Teilgetriebes ein Freilauf befindet, der ein Zahnrad mittelbar oder unmittelbar mit einer der Wellen in eine Richtung drehfest verbindet. Die Lösung der Aufgabe erfordert ferner, dass die erste und mindestens die zweite Betätigungseinrichtung als Teil der Schaltvorrichtung mittelbar oder unmittelbar mit mindestens einem elektrisch betriebenen Aktuator in Verbindung stehen und mindestens durch eines der folgenden Merkmale gekennzeichnet ist:
- Wenn innerhalb von ausgewählten Zeiträumen die Schaltvorrichtung der Getriebeeinheit die mindestens zwei Betätigungseinrichtungen mindestens zeitweise gleichzeitig bewegt, um einen Schaltvorgang von einem Gang in einen anderen Gang zu vollziehen, kann der Synchronisationsfehler minimiert werden.
- Ebenfalls kann der Synchronisationsfehler verkleinert werden, wenn innerhalb von anderen ausgewählten Zeiträumen die Schaltvorrichtung nur einzelne Betätigungseinrichtungen bewegt, um einen Schaltvorgang von einem Gang in einen anderen Gang zu vollziehen
- Dieser Synchronisationsfehler kann weiter verkleinert werden, wenn die Schaltvorrichtung die Betätigungseinrichtungen relativ zueinander mit einem zeitlichen Versatz oder einer unterschiedlichen Geschwindigkeit bewegt, um einen Schaltvorgang von einem Gang in einen anderen Gang zu vollziehen.
- Wenn mindestens eine Betätigungseinrichtung ist mittelbar oder unmittelbar mit einer Sensoreinrichtung verbunden ist, kann der Gangwechselprozeß besonders präzise ausgeführt werden, vor allen Dingen dann, wenn die Sensoreinrichtung ausgestaltet ist, Signale an eine Datenverarbeitungsvorrichtung zu übergeben oder mit ihr auszutauschen, die repräsentativ sind für einen momentanen Zustand der Betätigungseinrichtung.
- Die Präzision des Schaltvorgangs kann weiter gesteigert werden, wenn die Datenverarbeitungsvorrichtung mittelbar oder unmittelbar mit dem mindestens einem Aktuator verbunden, wobei die Datenverarbeitungsvorrichtung ausgestaltet ist, elektrische Signale oder elektrische Leistung an den Aktuator zu übergeben oder mit ihm auszutauschen.
- Für den Fahrradfahrer stehen nützliche Funktionen der Getriebeeinheit zur Verfügung, wenn die Datenverarbeitungsvorrichtung mittelbar oder unmittelbar mit einem Bedienelement verbunden ist, wobei das Bedienelement ausgestaltet ist, mindestens bei Inbetriebnahme der Getriebeeinheit Befehle vom Fahrradfahrer zu erhalten.

Es ist aufgrund von dieser Ausgestaltung im Rahmen der Erfindung möglich, beispielsweise die folgenden nützlichen Funktionalitäten umzusetzen: Die Getriebeeinheit sollte in guter Ausgestaltung die folgenden Modi kennen, die z.B. vor Inbetriebnahme des Fahrzeugs eingestellt werden:
1) Schalten mit Tipptaster am Bedienelement ohne Beachtung des Totpunktes der Tretkurbel: Hier wird der Schaltvorgang möglichst kurzfristig durchgeführt, ohne dass eine bestimmte Kurbelstellung erreicht werden muss. Der Fahrradfahrer betätigt unterschiedliche Tasten am Bedienelement, je nachdem ob er einen Gang hoch oder einen Gang runterschalten möchte.
2) Schalten mit Tipptaster mit Beachtung des Totpunktes der Tretkurbel: Hier wird der Schaltvorgang möglichst kurzfristig durchgeführt, wobei jedoch die Datenverarbeitungsvorrichtung unter Beachtung der optimalen Kurbelstellung den Gangwechsel durchführt. Der Fahrradfahrer betätigt ähnlich wie in der Version 1) unterschiedliche Tasten, je nachdem ob er einen Gang hoch oder einen Gang runterschalten möchte.
3) Automatikbetrieb mit Beachtung des Totpunktes der Tretkurbel: Hier wird in den sogenannten Automatikbetrieb der Schaltvorgang von der Datenverarbeitungsvorrichtung selbst eingeleitet, wobei in sinnvoller Ausgestaltung hier dieser Schaltvorgang in Abhängigkeit vom optimalen Kurbelwinkel durchgeführt wird. Bei Inbetriebnahme des Fahrrades stellt der Benutzer zum Beispiel seine persönliche Trittfrequenz am Bedienelement einmalig ein. Während der Fahrt muss der Fahrer nicht ständig selbst das Bedienelement bedienen, um Gangwechsel auszuführen. Die Datenverarbeitungsvorrichtung ist so ausgestaltet, dass sie intern ein Gangwechselsignal empfangen kann, das repräsentativ ist für einen von der Datenverarbeitungsvorrichtung selbst erzeugten Befehl zum Ausführen des Gangwechsels.

Zur Erklärung sei an dieser Stelle hinzugefügt, dass es aufgrund des pulsierenden Drehmomentverlaufs eines Radfahrers bei allen kraft-über-tra-genden Teilen zu einer wiederholenden Be- und Entlastung kommt. In diesem Zusammenhang ist in vorteilhafter Ausgestaltung der Datenverarbeitungsvorrichtung ebenfalls die Möglichkeit gegeben, den Schaltzeitpunkt auch in Abhängigkeit von den biomechanischen Eigenschaften des Radfahrers zu steuern. Da das Drehmoment an der Tretlagerwelle im unteren Totpunkt der Kurbel minimal ist, ist dieser Totpunktzeitpunkt für die Berechnung des optimalen Schaltzeitpunktes relevant.

Die Erfindung kann durch die folgenden voneinander unabhängigen, jeweils für sich vorteilhaften und beliebig miteinander kombinierbaren Weiterbildungen weiter verbessert werden.

Je mehr Betätigungseinrichtungen innerhalb der Getriebeeinheit mittelbar oder unmittelbar mit jeweils einer Sensoreinrichtung verbunden sind, desto präziser kann der Gangwechsel synchronisiert werden. Voraussetzung ist, wie bereits oben ausgeführt, dass die Sensoreinrichtung ausgestaltet ist, Signale an eine Datenverarbeitungsvorrichtung zu übergeben oder mit ihr auszutauschen, wobei die Signale repräsentativ sein müssen in Bezug auf den momentanen Zustand der jeweiligen Betätigungseinrichtung.

Die Mechanik innerhalb der Betätigungseinrichtungen kann mit wenigen Bauteilen einfach und zum Beispiel ohne Schrittschaltgetriebe aufgebaut werden, wenn die Getriebeeinheit dadurch gekennzeichnet ist, dass innerhalb der Schaltvorrichtung jede Betätigungseinrichtung von genau einem Aktuator bewegt wird. Aktuatoren werden in der heutigen Zeit für viele Anwendungen in hoher Anzahl gefertigt und sind am Markt preisgünstig verfügbar. Das ist ein Vorteil im Vergleich zu kostenintensiv herzustellenden Schrittschaltgetrieben.

Es ist vorteilhaft für das dynamische und zeitkritische Schalten, wenn innerhalb der Schaltvorrichtung jede Betätigungseinrichtung genau nur eine Kupplungseinrichtung bewegt und jede Kupplungseinrichtung ausschließlich eine einzelne Kupplung in unterschiedliche Zustände versetzt. Auf diese Weise werden die bewegten Massen bei jedem Schaltvorgang minimal gehalten.

Wenn die Getriebeeinheit dadurch gekennzeichnet ist, dass sie einen Hilfsantrieb aufweist, dessen Drehmoment mittelbar oder unmittelbar in eine Welle oder ein Zahnrad des ersten Teilgetriebes einleitbar ist, wobei mindestens ein Zahnrad dieses ersten Teilgetriebes mit einem weiteren Zahnrad in Verbindung steht, welches koaxial zur Tretlagerwelle angeordnet ist, kann Gewicht gespart werden, denn auf diese Weise werden Zahnräder innerhalb des ersten Teilgetriebes nicht nur zum Schalten, sondern auch für die Drehzahlreduzierung des Hilfsantriebs genutzt.

Wenn die Getriebeeinheit dadurch gekennzeichnet ist, dass das Zahnrad, welches koaxial zur Tretlagerwelle angeordnet ist, im Durchmesser größer ist als das Zahnrad aus dem ersten Teilgetriebe, mit welchem es in kämmender Verbindung steht, werden die Kräfte innerhalb der Kupplungen und Freiläufe signifikant reduziert, da sie mit höhere Drehzahl und reduziertem Drehmoment betrieben werden. Diese Ausgestaltung mit einem sogenannten Drehzahlerhöhungsrad ist auch zusätzlich vorteilhaft, wenn sich das große Zahnrad in Fahrtrichtung links in Bezug auf die Mittelebene des Fahrrades befindet, da auf diese Weise der Bauraum im Getriebegehäuse gut ausgenutzt wird. Dieser Umstand führt in vorteilhafter Weise zu einem formschönen Getriebegehäuse, welches sich nach vorne verjüngen kann. Die Mittelebene des Fahrrades ist in der Mitte des Fahrzeugs angeordnet und steht senkrecht zur Rotationsachse der Tretlagerwelle. Wenn alle Zahnräder, die koaxial zur Tretlagerwelle angeordnet sind, einen größeren Durchmesser haben als sämtliche anderen Zahnräder, die von dem Menschen aufgebrachte Antriebsleistung übertragen und nicht koaxial zur Tretlagerwelle angeordnet sind, kann sich das Getriebegehäuse formschön nach vorne verjüngen. Ebenso kann die Halterung der Getriebeeinheit im Rahmen in vorteilhafter Weise direkt in das Unterrohr übergehen sowie stabil und leicht ausgeführt werden. Auch der Schwerpunkt des Fahrzeugs wird positiv beeinflusst. Die Zahnräder, die von dem Menschen aufgebrachte Antriebsleistung übertragen, sind die Zahnräder, die sich in den jeweiligen Teilgetrieben befinden.

Wenn der sicherheitsrelevante Tretlagerfreilauf und die Sensoranordnung direkt und nah mit dem Drehzahlerhöhungsrad verbunden ist, kann im Vergleich zum Stand der Technik Gewicht und Bauraum eingespart werden. Wenn die Sensoranordnung in Fahrtrichtung links von der Abtriebshohlwelle angeordnet ist, die koaxial zur Tretlagerwelle angeordnet ist und aus dem Gehäuse herausgeführt wird, so wird vorhandener Bauraum in vorteilhafter Weise genutzt. Die gute Nutzung des Bauraums wird fortgesetzt, wenn sich die Sensoranordnung in Fahrtrichtung rechts von dem Drehzahlerhöhungsrad befindet.

Es entsteht zusätzlich ein vorteilhafter Bauraum für die Betätigungseinrichtung, den Aktuator und eine lastschaltfähige Kupplungseinrichtung, wenn die Getriebeeinheit dadurch gekennzeichnet ist, dass innerhalb der Teilgetriebe auf der Welle, auf der sich die Kupplung befindet kein zusätzlicher Freilauf befindet. Dieser Umstand ist vorteilhaft gegenüber dem Stand der Technik.

Die Getriebeeinheit kann leicht und schmal gebaut werden, wenn eine Welle aus einem Teilgetriebe zu einer Welle aus einem weiteren Teilgetriebe koaxial angeordnet und aus einem Stück gefertigt ist. Zusätzlich erhöht sich dieses Leichtbaupotential, wenn ein Zahnrad aus einem ersten Teilgetriebe zu einem Zahnrad aus einem zweiten Teilgetriebe koaxial angeordnet und mit diesem in einem Stück verbunden ist. Wenn diese zwei Zahnräder zusätzlich noch einstückig mit der Welle gefertigt werden, auf der sie sich befinden, werden Kosten eingespart. In der heutigen Zeit ist die Fertigung von einer komplexen Welle mit verschiedenen Zahnrädern mit Hilfe des Walzschäl-Verfahrens auf sogenannten Dreh-Fräszentren möglich.

Moderne Aktuatoren, die industriell in hoher Stückzahl zu günstigen Preisen am Markt verfügbar sind, besitzen meist Gleichstrommotoren, die mit hoher Drehzahl betrieben werden und leicht sind. Kombiniert man diese Motoren mit einem Reduziergetriebe und reduziert die Drehzahl des Gleichstrommotors mindestens um den Faktor 100, dann können hohe Kräfte über die Betätigungseinrichtung in die Kupplungseinrichtung eingeleitet werden. Dieses verbessert das Lastschaltverhalten in vorteilhafter Weise.

Innerhalb der Erfindung werden nur wenige Kupplungseinrichtungen benötigt, um eine Vielzahl von Gangstufen in der Getriebeeinheit umzusetzen. Es werden in beispielhaften Ausgestaltungen Getriebeeinheiten möglich, die nur maximal zwei Kupplungseinrichtungen auf einer Welle eines Teilgetriebes besitzen. Wenn die Getriebeeinheit im Rahmen der Erfindung dadurch gekennzeichnet ist, dass sich die Betätigungseinrichtung innerhalb von jedem Teilgetriebe zu großen Teilen am äußeren Ende der Wellen befinden, auf denen sich die Kupplungen befinden, so können Betätigungseinrichtung so ausgestaltet werden, dass hohe Kräfte übertragen werden können. Das führt in vorteilhafter Weise unter anderem zu einer Lastschaltfähigkeit.

Oben wurde angeführt, dass sich die Belastungen innerhalb der Kupplungen und Freiläufe durch die Verwendung des Drehzahlerhöhungsrad reduzieren lassen. Die Drehzahl, die am Getriebeausgang zur Verfügung gestellt werden muss, sollte jedoch wieder auf einem niedrigeren Niveau liegen. Diese Drehzahlreduzierung lässt sich ohne zusätzliche Zahnräder und somit ohne zusätzliches Gewicht vorteilhaft umsetzen, wenn die Getriebeeinheit dadurch gekennzeichnet ist, dass mindestens zwei Zahnräder aus dem letzten Teilgetriebe mittelbar mit der Abtriebshohlwelle verbunden und koaxial angeordnet sind. Hierbei sollte ein Zahnrad über einen Freilauf mit der Abtriebshohlwelle verbunden sein. Es wurde ja bereits angeführt, dass die Abtriebshohlwelle koaxial zur Tretlagerwelle angeordnet und aus dem Gehäuse herausgeführt wird.

Fahrräder mit Mittelmotor ohne Schaltgetriebe besitzen eine bestimmte Bauform und Baugröße. In Fahrtrichtung vor dem Mittelmotor befindet sich meist der Akku, wobei heutzutage der Motor teilweise und der Akku meist vollständig formschön in das Unterrohr des Fahrradrahmens integriert ist. Soll nun der Mittelmotor ohne Schaltgetriebe durch eine Getriebeeinheit mit Hilfsantrieb gemäß der Erfindung ersetzt werden, so kann am Markt ein kommerzieller Erfolg vor allem dann erzielt werden, wenn die Erfindung einen ähnliche Bauraum besitzt wie ein Mittelmotor ohne Schaltgetriebe. Dieser Vorteil wird unter anderem dadurch erreicht, dass die Getriebeeinheit dadurch gekennzeichnet ist dass der Winkel α zwischen einer ersten Ebene und einer zweiten Ebene kleiner als 90 Grad, insbesondere kleiner als 70 Grad, beträgt, wobei die Rotationsachsen der Tretlagerwelle und die Rotationsachsen sämtlicher Wellen in jedem Teilgetriebe parallel sind und eine erste Ebene, die durch die erste Rotationsachse von einer ersten Welle eines ersten Teilgetriebes und der Achse der Tretlagerwelle aufgespannt wird, einen Winkel α zu einer zweiten Ebene besitzt, die durch eine zweite Rotationsachse von einer zweiten Welle eines zweiten Teilgetriebes und der Achse der Tretlagerwelle aufgespannt wird.

Ein besonders kurzer Hinterbau wird erreicht, wenn sich alle Wellen sämtlicher Teilgetriebe in Fahrtrichtung vor der Tretlagerwelle befinden.

Damit der Radfahrer bei abgeschaltetem Hilfsantrieb den Elektromotor nicht mit antreibt, ist die Getriebeeinheit dadurch gekennzeichnet, dass sie einen Elektromotor aufweist, dessen Drehmoment über einen Freilauf in das Schaltgetriebe eingeleitet wird, wobei der Freilauf nicht koaxial zu einer Welle eines Teilgetriebes angeordnet ist. Wenn der Freilauf nicht koaxial zu einer weiteren Welle aus einem Teilgetriebe angeordnet ist, dann wird die Baubreite der Getriebeeinheit vorteilhaft schmal gehalten.

In einer Variante ist die Getriebeeinheit dadurch gekennzeichnet, dass der zeitliche Versatz oder die Geschwindigkeit an unterschiedlichen Betätigungseinrichtungen beim Schalten zusätzlich in Abhängigkeit von der Schaltrichtung variiert. Hierbei ist als eine Schaltrichtung der Schaltvorgang von einem hohen in einen niedrigen Gang definiert und als die andere Schaltrichtung ist der Schaltvorgang von einem niedrigen in einen hohen Gang definiert. Eine solche Ausgestaltung kann weiter verbessert werden, wenn der zeitliche Versatz oder die Geschwindigkeit an der unterschiedlichen Betätigungseinrichtungen beim Schalten zusätzlich in Abhängigkeit von der momentan eingelegten Gangstufe variiert.

Betrachtet man z.B. die z.B das Patent DE102004045364B4, so erkennt man, dass diese Getriebeeinheit eine sehr komplex aufgebaute Betätigungseinrichtung besitzt. Eine besonders einfach zu fertigende Betätigungseinrichtung entsteht im Rahmen der Erfindung, wenn sich mehr als ein elektrisch betriebener Aktuator innerhalb der Getriebeeinheit befindet.

Wenn die Getriebeeinheit unter anderem dadurch gekennzeichnet ist, dass die Freiläufe, die sich in den jeweiligen Teilgetrieben befinden,in einer Drehrichtung innerhalb von einem Winkelinkrement kleiner als 10 Grad einkuppeln können, kann das Problem des Durchsackens verkleinert werden.

Gemäß einem Aspekt kann in mindestens einem Teilgetriebe auf der Welle, auf der mindestens eine schaltbare Kupplung angeordnet ist, kein zusätzlicher Freilauf angeordnet sein.

Gemäß einem weiteren Aspekt kann eine Welle aus einem Teilgetriebe zu einer Welle aus einem weiteren Teilgetriebe koaxial angeordnet sein, insbesondere mit dieser Welle in einem Stück verbunden sein.

Gemäß einem weiteren Aspekt kann jede Betätigungseinrichtung mit mindestens einer Kupplungseinrichtung und mindestens einem Aktuator verbunden sein, wobei jeder Aktuator mindestens aus einem Elektromotor und einem Getriebe besteht, wobei das Getriebe die Drehzahl des Elektromotors mindestens um den Faktor 100 reduziert.

Gemäß einem Aspekt kann die Betätigungseinrichtung innerhalb von jedem Teilgetriebe zu großen Teilen am äußeren Ende der Welle angeordnet sein, auf der sich die Kupplungseinrichtung befindet.

Gemäß einem weiteren Aspekt kann die Getriebeeinheit einen Elektromotor aufweisen, dessen Drehmoment über einen Freilauf in das Schaltgetriebe eingeleitet wird, wobei der Freilauf nicht koaxial zu einer Welle eines Teilgetriebes angeordnet ist.

Gemäß einem weiteren Aspekt kann der zeitliche Versatz oder die Geschwindigkeit an den unterschiedlichen Betätigungseinrichtungen zusätzlich in Abhängigkeit von der Schaltrichtung variieren, wobei als die eine Schaltrichtung der Schaltvorgang von einem hohen in einen niedrigen Gang definiert ist und wobei als die andere Schaltrichtung der Schaltvorgang von einem niedrigen in einen hohen Gang definiert ist.

Gemäß einem weiteren Aspekt kann der zeitliche Versatz oder die Geschwindigkeit an den unterschiedlichen Betätigungseinrichtungen zusätzlich in Abhängigkeit von der momentan eingelegten Gangstufe variieren.

Gemäß einem weiteren Aspekt können alle Zahnräder, die koaxial zur Tretlagerwelle angeordnet sind, einen größeren Durchmesser haben als sämtliche anderen Zahnräder, die von dem Menschen aufgebrachte Antriebsleistung übertragen und nicht koaxial zur Tretlagerwelle angeordnet sind.

Gemäß einem weiteren Aspekt können sich mindestens zwei elektrisch betriebene Aktuatoren innerhalb der Getriebeeinheit befinden.

Gemäß einem weiteren Aspekt können die Freiläufe, die sich in den jeweiligen Teilgetrieben befinden, in einer Drehrichtung innerhalb von einem Winkelinkrement kleiner als 10 Grad einkuppeln.

Im Folgenden ist die Erfindung unter Bezugnahme auf die beigefügten Zeichnungen anhand von beispielhaften Ausgestaltung exemplarisch erläutert. Nach Maßgabe der obigen Ausführungsformen können einzelne Merkmale weggelassen werden, sollte es auf den technischen Effekt eines Merkmals bei einer bestimmten Anwendung nicht ankommen. Umgekehrt kann ein bei einer beispielhaften Ausgestaltung nicht beschriebenes oder dargestelltes Merkmal hinzugenommen werden, wenn es auf den technischen Effekt dieses Merkmals bei einer bestimmten Anwendung ankommen sollte.

In den Zeichnungen sind für Elemente, die einander hinsichtlich Aufbau und/oder Funktion entsprechen, dieselben Bezugszeichen verwendet.

Es zeigen:
- Fig. 1: Eine schematische Seitenansicht eines Elektrofahrrads mit Getriebeeinheit, insbesondere einer Tretlagerschaltung, in einer ersten Ausgestaltung;
- Fig. 2: eine schematische vergrößerte Darstellung der Getriebeeinheit der Figur 1 von rechts;
- Fig. 3: eine schematische perspektivische Darstellung der geöffneten Getriebeeinheit von links vorne;
- Fig. 4: eine schematische Darstellung einer Getriebeeinheit.

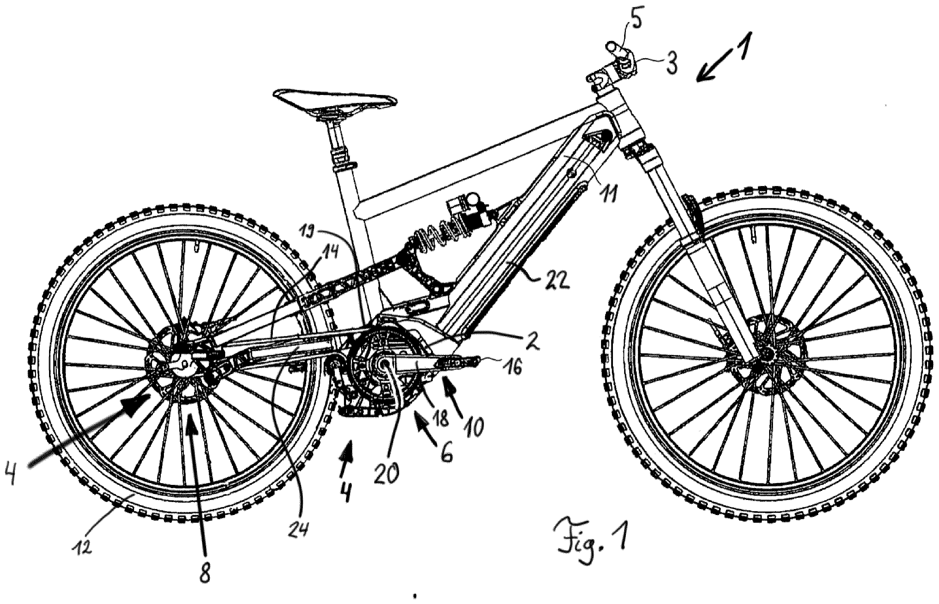

Fig. 1 zeigt ein Fahrrad 1, das mit oder ohne einen Hilfsmotor 2 ausgestaltet sein kann. Eine Getriebeeinheit 4 befindet sich im Bereich des Tretlagers 6 (Tretlagerschaltung) oder an bzw. in der Hinterradnabe 8 (Nabenschaltung). In einer Variante kann auch eine Tretlagerschaltung mit einer Nabenschaltung kombiniert sein, die Nabenschaltung und die Tretlagerschaltung können dann als zwei Teilgetriebe einer gemeinsamen Getriebeeinheit 4 angesehen werden.

Bei dem Fahrrad 1 kann es sich um ein Fahrrad jeglicher Bauform für jedweden Einsatz handeln, beispielsweise ein Fahrrad mit Tiefeinstieg, ein Fahrrad mit Fachwerk-, Trapez-, Kreuz-, Mixte- oder Diamantrahmen, ein teil- oder vollgefedertes Fahrrad, ein Tourenrad, ein Lastenrad, ein Mountainbike, ein Gravelbike, ein Cyclocross-Fahrrad oder ein Rennrad. Das Fahrzeug kann einspurig oder auch mehrspurig gestaltet sein.

In allen Fällen wird das Fahrrad 1 mittels eines Pedalantriebs 10 angetrieben und die Kraft des Pedalantriebes 10, gegebenenfalls verstärkt durch den Hilfsmotor 2, wird an das Hinterrad 12 übertragen. Die Übertragung der Antriebsleistung vom Pedalantrieb 10 an das Hinterrad 12 bzw. die Hinterradnabe 8 kann mittels eines Zugmittels 14, beispielsweise einem Riemen oder einer Kette erfolgen.

Der Pedalantrieb 10 weist Pedale 16 auf, die drehbar an Tretkurbeln 18 angebracht sind. Die Tretkurbeln 18 mit den Pedalen 16 sind an einer Tretlagerwelle 20 befestigt.

Das Fahrrad 1 kann einen Akku 22 aufweisen, der als Energiequelle genutzt werden kann, beispielsweise für den Hilfsmotor 2 und/oder Aktuatoren (nicht gezeigt), mit denen sich die Getriebeeinheit 4 schalten lässt. Der Fahrradfahrer kann über ein Bedienelement 3, welches sich am Lenker 5 befindet, die Getriebeeinheit 4 bedienen. Das Hinterrad 12 ist an einer Schwinge 24 befestigt und rotiert um die Drehachse 19.

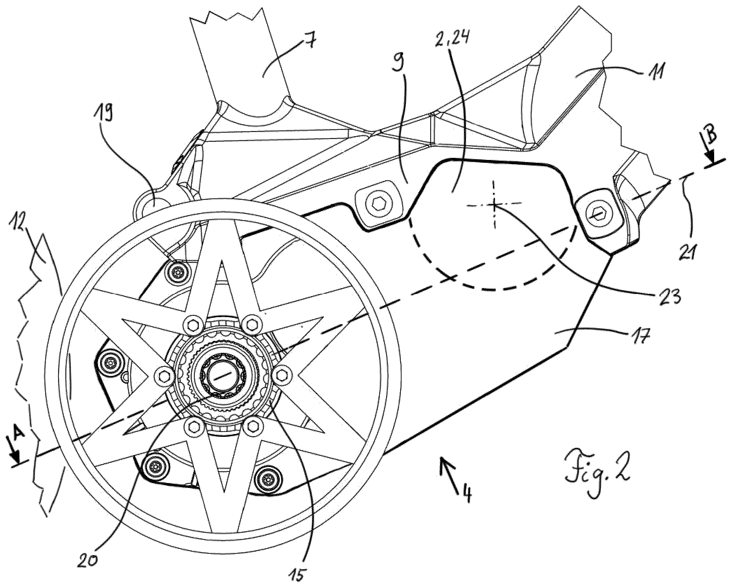

Figur 2 zeigt die Seitenansicht von rechts von der Getriebeeinheit 4, eingeschaubt in einer Haltevorrichtung 9. Die Haltevorrichtung 9 ist mit dem Unterrohr 11 und dem Sitzrohr 7 fest verbunden. Das Zugmittel 14 ist nicht dargestellt. Sichtbar jedoch das Abtriebszahnrad 13, welches in dieser beispielhaften Ausführung mit der Abtriebshohlwelle 15 verschraubt ist. Das Abtriebszahnrad 13 kann zum Beispiel als Zahnriemenscheibe ausgeführt werden und überträgt die Antriebsleistung über das Zugmittel 14 an das Hinterrad 12. Die Abtriebshohlwelle 15 befindet sich koaxial zur Tretlagerwelle 20. Die Tretkurbeln 18 sind in Figur 2 nicht dargestellt. Die Tretlagerschaltung 4 besitzt ein Gehäuse 17. In dieser vorteilhaften Ausgestaltung ist die Gehäuseform so gewählt, dass sich die Drehachse 19 an einer optimalen Position befindet, damit der Abstand vom teilweise dargestellten Hinterrad 12 bis zum Gehäuse 17 in vorteilhafter Weise klein gehalten werden kann. Unter Anti-Squat versteht man eine Vorrichtung an Radfahrzeugen, die das "Eintauchen" beim Beschleunigen und damit eine Nickbewegung des Aufbaus nach hinten durch die dynamische Radlastverlagerung verhindern oder vermindern soll. Sie wird auch als Anfahrnickausgleich bezeichnet. Um bei Fahrrädern ein gutes Anti-Squat Verhalten umzusetzen, ist eine Position der Drehachse 19 der Schwingenlagerung in der Nähe der Tretlagerwelle 20, meist oberhalb und leicht hinter der Tretlagerwelle 20, vorteilhaft. Zusätzlich ist es für die Geometrie und das resultierende Fahrverhalten des Fahrrades vorteilhaft, wenn der Abstand von der Tretlagerwelle 20 zur Drehachse des Hinterrades 12 möglichst gering ist. Die Schnittdarstellung AB verläuft mittig durch das Gehäuse 17 und bildet eine Mittelebene 21. Der Hilfsantrieb 2 ist hier als Elektromotor 24 ausgeführt und befindet sich innerhalb des Gehäuses 17 in Fahrtrichtung vor der Tretlagerwelle 20. Insbesondere befindet sich die Rotationsachse des Elektromotors 23 vorzugsweise oberhalb der Mittelebene 21.

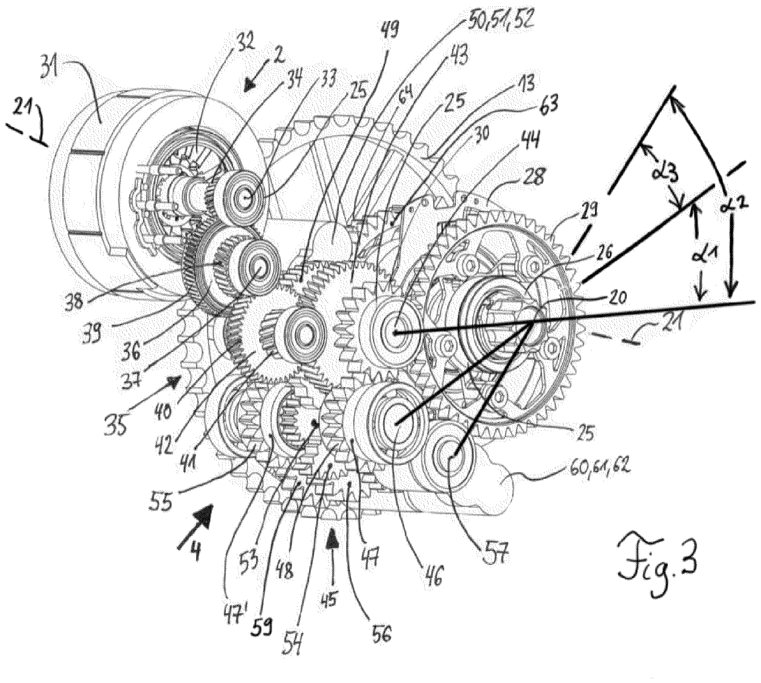

Figur 3 zeigt eine perspektivische Seitenansicht der Tretlagerschaltung 4 aus Figur 2 von links vorne. Die Darstellung zeigt beispielhaft eine vorteilhafte Ausgestaltung der Getriebeeinheit 4 für Fahrräder mit integriertem elektrischen Antriebsmotor 2 mit acht Gangstufen, die elektrisch betätigt werden. Das Zugmittel 14, die Tretkurbeln 18, das Gehäuse 17 und die Haltevorrichtung 9 werden in dieser Darstellung nicht gezeigt. Innerhalb des Gehäuses 17 befindet sich ein Schmieröl, das für einen leichten Lauf der Zahnräder sorgt. Die Tretlagerwelle 20 ist über Kugellager 25 im Gehäuse 17 gelagert. Damit kein Öl austreten kann, befinden sich an vier unterschiedlichen Stellen im Gehäuse 17 Wellendichtringe 26.

Die vom Fahrradfahrer aufgebrachte Antriebsleistung wird über die Tretlagerwelle 20 über einen Tretlagerfreilauf 27 und eine Sensoranordnung 28 bis zu einem Antriebszahnrad 29 geleitet. Das Antriebszahnrad 29 befindet sich in Fahrtrichtung links der Mittelebene des Fahrzeugs, ist koaxial zur Tretlagerwelle angeordnet. Alle Zahnräder, die koaxial zur Tretlagerwelle angeordnet sind, haben einen größeren Durchmesser als sämtliche anderen Zahnräder, die von dem Menschen aufgebrachte Antriebsleistung übertragen und nicht koaxial zur Tretlagerwelle angeordnet sind.

Das Antriebszahnrad 29 sei im folgenden auch als Drehzahlerhöhungsrad 29 bezeichnet, da es mit einem Drehzahlerhöhungsritzel 30 in kämmender Verbindung steht. Das Drehzahlerhöhungsritzel 30 ist fest verbunden mit der ersten Kupplungswelle 44. Die erste Kupplungswelle 44 ist über Kugellager 25 im Gehäuse 17 gelagert. Die erste Kupplungswelle 44 ist ebenfalls fest mit dem Motoreinkoppelzahnrad 43 verbunden. An dieser Stelle werden die von Fahrradfahrer aufgebrachten Antriebsleistungen mit den Antriebsleistungen des Elektromotors 2 zusammengeführt.

Der Elektromotor 2 besitzt einen Stator 31 und einen Rotor 32, wobei der Rotor 32 seine Leistung auf eine Motorwelle 33 überträgt. Die Motorwelle 33 ist mit einem Motorritzel 34 verbunden. Die Motorwelle 33 ist ebenfalls über Kugellager im Gehäuse 17 gelagert. Da der Hilfsmotor 2 an der Motorwelle 33 an einem guten Arbeitspunkt mit einer hoher Drehzahl rotiert und der Fahrradfahrer die Tretlagerwelle jedoch meist nur mit einer Drehzahl von 50-100 U/min antreibt, benötigt der Elektromotor ein Reduziergetriebe 35, welches in sinnvoller Ausgestaltung die Drehzahl um den Faktor 30-40 reduziert.

Das Reduziergetriebe 35 ist vorteilhaft in mehrere Stufen unterteilt. Das Motorritzel 34 steht mit einem Motorritzelrad 39 in Verbindung. Koaxial zum Motorritzelrad 39 ist ein Motorfreilauf 36 angeordnet. Der Motorfreilauf 36 sorgt dafür, dass bei ausgeschaltetem Hilfsantrieb 2 der Motor 2 nicht rotiert und als bremsender Generator läuft. Der Motorfreilauf ist in der Lage, ein Drehmoment auf die Motorfreilaufwelle 37 zu übertragen. Das Motorfreilaufzahnrad 38 ist in fertigungsgerechter Ausgestaltung einstückig mit der Motorfreilaufwelle 37 verbunden. Das Motorfreilaufzahnrad 38 kämmt mit der großen Verzahnung 40 des Motorstufenzahnrades 42 und reduziert auf diese Weise die Motordrehzahl weiter. Das Motorstufenzahnrad 42 besitzt eine große Verzahnung 40 und eine kleine Verzahnung 41, wobei in vorteilhafter Ausgestaltung des Motorstufenzahnrad 42 einstückig ausgeführt ist. Das bereits oben beschriebene Motoreinkoppelzahnrad 43 steht nun wiederum mit dieser kleiner Verzahnung 41 des Motorstufenzahnrades 42 in kämmender Verbindung. Die folgenden Tabelle veranschaulicht die Übersetzungen dieses Reduziergetriebes zwischen der Motorwelle 33 und der Tretlagerwelle 20. In der Tabelle 1 befinden sich beispielhafte Zähnezahlen und die daraus resultierenden Übersetzungen.

**Tabelle 1.**

| | Bezeichnung | Zähnezahl | Bezeichnung | Zähnezahl | Übersetzung |
|---|---|---|---|---|---|
| Stufe 1 | Motorritzel (34) | 23 | Motorritzelrad (39) | 62 | 2,70 |
| Stufe 2 | Motorfreilaufzahnrad (38) | 27 | Motorstufenzahnrad (groß) (40) | 45 | 1,67 |
| Stufe 3 | Motorstufenzahnrad (klein) (41) | 16 | Motoreinkoppelzahnrad (43) | 50 | 3,13 |
| Stufe 4 | Drehzahlerhöhungsritzel (30) | 19 | Antriebszahnrad (29) | 47 | 2,47 |
| | | | Gesamtübersetzung | | 34, 73 |

Man erkennt in der Tabelle 1, dass die Motordrehzahl bis zur Tretlagerwelle 20 um den Faktor 34,73 reduziert wird. Das Motoreinkoppelzahnrad 43 ist mit dem Drehzahlerhöhungsritzel 30 auf der erste Kupplungswelle 44 verbunden. Die erste Kupplungswelle 44 ist der Eingang in die Schaltgetriebebaugruppe 45.

Die Figur 3 zeigt ein Getriebe mit acht Gängen, wobei das Getriebe drei Teilgetriebe besitzt, die in Reihe geschaltet sind. Die erste Welle des ersten Teilgetriebes wird durch die erste Kupplungswelle 44 gebildet. Die zweite Welle des ersten Teilgetriebes wird durch die Freilaufwelle 46 gebildet. Auf der Freilaufwelle 46 befindet sich ein selbstbetätigter Klemmkörperfreilauf 47, der in der Lage ist, ein Drehmoment in einer Drehrichtung von dem Freilaufzahnrad 48 des ersten Teilgetriebes auf die Freilaufwelle 46 zu übertragen. Das Freilaufzahnrad 48 des ersten Teilgetriebes besitzt 19 Zähne und kämmt mit dem Drehzahlerhöhungsritzel 30, welches ebenfalls 19 Zähne besitzt. Hierdurch wird eine "eins -zu-eins" Übersetzung als eine Gangstufe im ersten Teilgetriebe realisiert. In Fahrrichtung rechts von dem Motoreinkoppelzahnrad 43 befindet sich auf der ersten Kupplungswelle 44 gelagert ein erstes Losrad 49 des ersten Teilgetriebes mit 51 Zähnen.

Das erste Losrad 49 kann über einen ersten Aktuator 50, eine erste Betätigungseinrichtung 51 und eine erste Kupplungseinrichtung 52 in eine Richtung drehfest mit der ersten Kupplungswelle verbunden werden. Dieser Aufbau bildet eine elektrisch schaltbare Freilaufkupplung, die in zwei Zustände gebracht werden kann. In einem ersten Zustand ist die Kupplung aktiviert und kann ein Drehmoment in eine Richtung von der Welle auf das Zahnrad übertragen. In der anderen Drehrichtung kann kein Drehmoment übertragen werden: Die Welle läuft frei. In einem zweiten Zustand ist die Kupplung deaktiviert und kann in beiden Drehrichtungen keine Drehmomente auf das Zahnrad übertragen. Das erste Losrad 49 des ersten Teilgetriebes kämmt mit dem ersten Freilaufwellenritzel 53 und realisiert eine Übersetzung von 51/20 ins Schnelle. Das erste Freilaufwellenritzel 53 besitzt 20 Zähne und ist fest mit der Freilaufwelle 46 verbunden. In der Mitte der Freilaufwelle 46 befindet sich ebenfalls das zweite Freilaufwellenzahnrad 54 des zweiten Teilgetriebes in einer freigeschnittenen Darstellung, damit man das Freilaufwellenritzel 53 in der Darstellung erkennen kann. Das zweite Freilaufwellenzahnrad 54 des zweiten Teilgetriebes ist ebenfalls fest mit der Freilaufwelle 46 verbunden und besitzt 32 Zähne.

In Fahrtrichtung rechts vom Freilaufwellenritzel 53 befindet sich ein weiterer selbstbetätigter Klemmkörperfreilauf 47', der das Freilaufzahnrad 55 des zweiten Teilgetriebes in eine Drehrichtung mit der Freilaufwelle 46 verbinden kann. Beide Freilaufzahnräder 55 und 48 der ersten beiden Teilgetriebe besitzen 19 Zähne. Das Freilaufzahnrad 55 des zweiten Teilgetriebes kämmt mit einem Kupplungswellenritzel 56 des zweiten Teilgetriebes mit 19 Zähnen und bildet eine "einszu-eins" Übersetzung zwischen der Freilaufwelle 46 und der zweiten Kupplungswelle 57. Die zweite mögliche Übersetzung innerhalb des zweiten Teilgetriebes wird dadurch gebildet, dass das zweite Freilaufwellenzahnrad 54 mit einem Kupplungswellenzahnrad 58 der zweiten Kupplungswelle 57 kämmt. Das Freilaufwellenzahnrad 54 ist mit 32 Zähnen ausgestattet. Das Kupplungswellenzahnrad 58 ist mit 20 Zähnen ausgestattet. Dieses Kupplungswellenzahnrad 58 kann über einen zweiten Aktuator 60, eine zweite Betätigungseinrichtung 61 und eine zweite Kupplungseinrichtung 62 in eine Richtung drehfest mit der zweiten Kupplungswelle 57 verbunden werden. In Fahrrichtung rechts von dem Kupplungswellenritzel 56 des zweiten Teilgetriebes befindet sich das Kupplungswellenritzel 59 des dritten Teilgetriebes mit 22 Zähnen und kann über einen dritten Aktuator 70, eine dritte Betätigungseinrichtung 71 und eine dritte Kupplungseinrichtung 72 in eine Richtung drehfest mit der zweiten Kupplungswelle 57 verbunden werden.

Die zweite Kupplungswelle 57 bildet einen Teil des zweiten und dritten Teilgetriebes. Das Kupplungswellenritzel 56 des zweiten Teilgetriebes hat 19 Zähne und ist fest mit der zweiten Kupplungswelle 57 verbunden. In vorteilhafter Ausgestaltung können die Aktuatoren, die Betätigungseinrichtungen und die Kupplungseinrichtung unterschiedlichste Bauformen und Ausführungen nach dem Stand der Technik aufweisen. Vorteilhaft sind beispielsweise Ausführungen, wie sie in DE102022001739.3, DE102021109207.8, DE102004045364B4, DE102007013444A1 oder DE102008045294A1 beschrieben sind. Das dritte Teilgetriebe ist in Figur 3 nur im Hintergrund erkennbar. Der Abtrieb wird durch die Abtriebshohlwelle 15 gebildet, die koaxial zur Tretlagerwelle 20 angeordnet ist und mit dem Abtriebszahnrad 13 fest verschraubt ist. Auf der Abtriebshohlwelle 15 befindet sich das Freilaufzahnrad der Abtriebshohlwelle 63 mit 47 Zähnen und kämmt mit dem Kupplungswellenritzel 56, welches 19 Zähne besitzt. Das Kupplungswellenritzel 56 bildet somit einen Teil des zweiten und einen Teil des dritten Teilgetriebes. Das Freilaufzahnrad der Abtriebshohlwelle 63 ist über einen Klemmkörperfreilauf 47" mit der Abtriebshohlwelle 15 verbunden. In Fahrtrichtung rechts neben dem Freilaufzahnrad der Abtriebshohlwelle 63 befindet sich das Kupplungswellenzahnrad des dritten Teilgetriebes 64. Es besitzt 43 Zähne und ist fest mit der Abtriebshohlwelle 15 verbunden. Die folgende Tabelle zeigt den Aufbau sämtlicher Getriebestufen und die resultierenden Übersetzungen des 8-Gang Getriebes:

**Tabelle 2**

| | Bezeichnung | Zähnezahl | Bezeichnung | Zähnezahl | Übersetzung |
|---|---|---|---|---|---|
| i0 | Antriebszahnrad (29) | 47 | Drehzahlerhöhungsritzel (30) | 19 | 2,474 |
| i1 | Drehzahlerhöhungsritzel (30) | 19 | Freilaufzahnrad des ersten TG (48) | 19 | 1,000 |
| i2 | erstes Losrad des ersten TG. (49) | 51 | erstes Freilaufwellenritzel (53) | 20 | 2,550 |
| i3 | zweites Freilaufwellenzahnrad des zweiten TG (54) | 32 | Kupplungswellenzahnrad des zweiten TG (58) | 20 | 1,600 |
| i4 | Freilaufzahnrad des zweiten TG (55) | 19 | Kupplungswellenritzel (56) | 19 | 1,000 |
| i5 | Kupplungswellenritzel (56) | 19 | Freilaufzahnrad der Abtriebshohlwelle (63) | 47 | 0,404 |
| i6 | Kupplungswellenritzel des dritten Teilgetriebes (59) | 22 | Kupplungswellenzahnrad des dritten Teilgetriebes (64) | 43 | 0,512 |

Die Übersetzung "i0" ist immer aktiv und sorgt dafür, dass die Drehmomente in den Kupplungen und Freiläufen in einem akzeptablen Bereich liegen und die Bauteile leicht gebaut werden können. Die Übersetzung "i2" ist nur aktiv, wenn der erste Aktuator aktiviert ist. Die Übersetzung "i3" ist nur aktiv, wenn der zweite Aktuator aktiviert ist. Die Übersetzung "i6" ist nur aktiv, wenn der dritte Aktuator aktiviert ist. Aus der Kombination dieser Möglichkeiten ergeben sich acht Gangstufen, die in der folgenden Tabelle dargestellt sind:

**Tabelle 3.**

| | | Teilgetriebe #1 | | Teilgetriebe #2 | | Teilgetriebe #3 | | | |
|---|---|---|---|---|---|---|---|---|---|
| Gangstufe | i0 | i1 | i2 | i3 | i4 | i5 | i6 | i-ges. | Sprung(%) |
| 1 | 2,474 | 1,000 | | | 1,000 | 0,404 | | 1,00 | |
| 2 | 2,474 | 1,000 | | | 1,000 | | 0,512 | 1,27 | 27 |
| 3 | 2,474 | 1,000 | | 1,600 | | 0,404 | | 1,60 | 26 |
| 4 | 2,474 | 1,000 | | 1,600 | | | 0,512 | 2,03 | 27 |
| 5 | 2,474 | | 2,550 | | 1,000 | 0,404 | | 2,55 | 26 |
| 6 | 2,474 | | 2,550 | | 1,000 | | 0,512 | 3,23 | 27 |
| 7 | 2,474 | | 2,550 | 1,600 | | 0,404 | | 4,08 | 26 |
| 8 | 2,474 | | 2,550 | 1,600 | | | 0,512 | 5,17 | 27 |

Die Tabelle 3 zeigt, dass mit Hilfe der gewählten Zähnezahlen ein Getriebe mit 517 Prozent Spreizung umsetzbar ist. Die Gangsprünge liegen zwischen 26-27 Prozent. Das beispielhafte Getriebe kann für unterschiedliche Fahrzeuge mit unterschiedlichen Raddurchmessern verwendet werden, wenn die Übersetzung des Kettentriebs oder des Riementriebs sinnvoll angepasst wird.

**Tabelle 4.**

| | | Teilgetriebe #1 | | Teilgetriebe #2 | | Teilgetriebe #3 | |
|---|---|---|---|---|---|---|---|
| Gangstufe | i0 | erster Aktuator | | zweiter Aktuator | | dritter Aktuator | |
| 1 | 2,474 | deaktiviert | | | deaktiviert | deaktiviert | |
| 2 | 2,474 | deaktiviert | | | deaktiviert | | aktiviert |
| 3 | 2,474 | deaktiviert | | aktiviert | | deaktiviert | |
| 4 | 2,474 | deaktiviert | | aktiviert | | | aktiviert |
| 5 | 2,474 | | aktiviert | | deaktiviert | deaktiviert | |
| 6 | 2,474 | | aktiviert | | deaktiviert | | aktiviert |
| 7 | 2,474 | | aktiviert | aktiviert | | deaktiviert | |
| 8 | 2,474 | | aktiviert | aktiviert | | | aktiviert |

Die Tabelle 4 zeigt, wie durch die Aktivierung und Deaktivierung der drei Aktuatoren die acht unterschiedlichen Gangstufen eingelegt werden können. Bei Fahrrad-Schaltgetrieben nach dem Stand der Technik wird ein hoher technischer Aufwand innerhalb der Betätigungseinrichtung betrieben, um die relevanten Gangwechsel in unterschiedlichen Teilgetrieben mechanisch umzusetzen. So werden beispielsweise drehbare Schaltwellen eingesetzt, die über Schaltnocken oder Kulissensteuerung sowie Schrittschaltgetriebe die Kupplungen einzelner Zahnradpaarungen bzw. Schaltstufen ein- und auskuppeln. Der eingelegte Gang ergibt sich aus der Kombination der gerade eingekuppelten Zahnradpaarungen.

Bei einigen Gangwechseln müssen gleichzeitig zwei und mehr Kupplungen eingekuppelt und gleichzeitig später andere ausgekuppelt werden. Das sind meistens Kupplungseinrichtungen, die sich in unterschiedlichen Teilgetrieben befinden. Bei solchen Gangwechseln besteht die Gefahr, dass bei einem nicht exakt gleichzeitigen Kuppeln und Entkuppeln der relevanten Kupplungen Zwischengänge eingelegt werden können oder gar ein Leertritt erfolgt. Ein Zwischengang wird eingelegt, wenn eine der beiden für den Gangwechsel einzukuppelnden Kupplungen vor der anderen Kupplung eingekuppelt ist, so dass für kurze Zeit unbeabsichtigt eine andere Schaltstufe im Leistungsfluss durch das Fahrrad-Schaltgetriebe geschaltet ist. Dies macht sich dadurch bemerkbar, dass der Radfahrer kurzzeitig mit einer anderen Trittfrequenz treten muss, als er eigentlich beabsichtigt. Dies kann zum Sturz führen, wenn bei einer Bergauffahrt der Zwischengang einen zu hohen Gang darstellt, so dass die Trittfrequenz so stark sinkt, dass der Fahrer aus dem Tritt kommt und umkippt. Umgekehrt kann ein zu kleiner Zwischengang dazu führen, dass der Radfahrer kurzfristig zu schnell treten muss und vom Pedal rutscht.

In der beispielhaften Ausführung gemäß Figur 3 wird immer genau ein Aktuator verwendet, um über eine Betätigungseinrichtung genau eine einzige Kupplungseinrichtung zu steuern oder zu regeln. Gemäß Tabelle 4 sind somit drei Aktuatoren notwendig. Es ist gemäß der Erfindung vorteilhaft, dass nur drei Kupplungen geschaltet werden müssen, um insgesamt 8 Gangstufen zu erreichen. Ebenso ist es vorteilhaft, dass der Stellweg, Stellwinkel oder auch die Stellgeschwindigkeit der drei Betätigungseinrichtungen in Relation zueinander durch eine Datenverarbeitungvorrichtung gesteuert oder geregelt werden kann. Solche eine elektronische Regelung hat gegenüber einer festen Abfolge innerhalb einer rein mechanischen Ansteuerung den Vorteil, das die Bewegung der Kupplungen auch von weiteren ParameteRN, wie zum Beispiel die Schaltrichtung, Trittfrequenz, Drehmoment und weiteren Getriebeparametem abhängig gemacht werden kann. Es sind innerhalb von anderen beispielhaften Ausgestaltungen weitere Mischformen möglich: Es ist zum Beispiel möglich, dass ein Aktuator gleichzeitig zwei Betätigungseinrichtungen bewegt und ein zweiter Aktuator nur eine Betätigungseinrichtung bewegt. Zusätzlich sind Ausgestaltungen möglich, in denen eine Betätigungseinrichtung eine Mehrzahl von Kupplungseinrichtungen ansteuert.

Die erfindungsgemäße Ausgestaltung ist, wie auch in Figur 3 beispielhaft dargestellt, in jedem einzelnen Teilgetriebe in der Lage, die Synchronisation und das oben beschriebene Problem des Durchsackens zu minimieren. Dieser wird insbesondere durch die Kombination der bereits angeführten Merkmale mit einem schaltbaren Freilauf mit einem selbstbetätigten Klemmkörperfreilauf in jedem Teilgetriebe erreicht. Der Klemmkörperfreilauf arbeitet kraftschlüssig und ist in der Lage, innerhalb von einem sehr kleinen Winkelinkrement ein Zahnrad mit der jeweiligen Welle zu verbinden. Dieses Prinzip ist im Allgemeinen auch mit einem formschlüssigen Freilauf möglich, wenn das Rastinkrement klein genug gewählt wird.

Figur 3 zeigt weiterhin beispielhaft, dass eine vorteilhaft kleine, leichte und schmale Bauform einer Getriebeeinheit 4 bevorzugt die folgenden Baugruppen integrieren kann:
- Hilfsantrieb 2,
- Reduziergetriebe 35,
- Erstes Teilgetriebe TG1,
- Zweites Teilgetriebe TG2,
- Drittes Teilgetriebe TG3,
- erster Aktuator 50,
- zweiter Aktuator 60,
- dritter Aktuator 70,
- erste Betätigungseinrichtung 51,
- zweite Betätigungseinrichtung 61,
- dritte Betätigungseinrichtung 71,
- erste Kupplungseinrichtung 52,
- zweite Kupplungseinrichtung 62,
- dritte Kupplungseinrichtung 72,
- Sensoranordnung 28, Tretlagerfreilauf 27 und Tretlagerwelle 20,
- Datenverarbeitungsvorrichtung 82 und Controller für Hilfsantrieb 66.

Diese Integration dieser Vielzahl von Bauteile ist nur durch eine spezielle Anordnung der unterschiedlichen Wellen im Raum und die bereits betrachtete spezielle Positionierung des Hilfsantriebs 2 im Raum wie folgt möglich:
- Betrachtet man innerhalb von Figur 3 die erste Ebene, die durch die Rotationsachse der Tretlagerwelle 20 und die Rotationsachse der ersten Kupplungswelle 44 aufgespannt wird und ermittelt die Winkellage zu der zweiten Ebene, die durch die Rotationsachse der Tretlagerwelle 20 und die Rotationsachse der Freilaufwelle 46 aufgespannt wird, so ergibt sich der Winkel α1 zu 27,5 Grad.
- Betrachtet man innerhalb von Figur 3 die erste Ebene, die durch die Rotationsachse der Tretlagerwelle 20 und die Rotationsachse der ersten Kupplungswelle 44 aufgespannt wird und ermittelt die Winkellage zu der dritten Ebene, die durch die Rotationsachse der Tretlagerwelle 20 und die Rotationsachse der zweiten Kupplungswelle 57 aufgespannt wird, so ergibt sich der Winkel α2 zu 55 Grad.
- Betrachtet man innerhalb von Figur 3 die zweite Ebene, die durch die Rotationsachse der Tretlagerwelle 20 und die Rotationsachse der Freilaufwelle 46 aufgespannt wird und ermittelt die Winkellage zu der dritten Ebene, die durch die Rotationsachse der Tretlagerwelle 20 und die Rotationsachse der zweiten Kupplungswelle 57 aufgespannt wird, so ergibt sich der Winkel α3 zu 27,5 Grad.

Allgemein formuliert wird diese vorteilhafte Bauform unter anderem dadurch erreicht, dass die Getriebeeinheit 4 neben allen anderen Merkmalen dadurch gekennzeichnet ist, dass der Winkel α zwischen einer ersten Ebene und einer zweiten Ebene kleiner als 90 Grad beträgt, wobei die Rotationsachsen der Tretlagerwelle 20 und die Rotationsachsen sämtlicher anderer Wellen in jedem Teilgetriebe 44,46,57 parallel sind und eine erste Ebene, die durch die erste Rotationsachse von einer ersten Welle eines ersten Teilgetriebes und der Achse der Tretlagerwelle aufgespannt wird, einen Winkel α zu einer zweiten Ebene besitzt, die durch eine zweite Rotationsachse von einer zweiten Welle eines zweiten Teilgetriebes und der Achse der Tretlagerwelle aufgespannt wird.

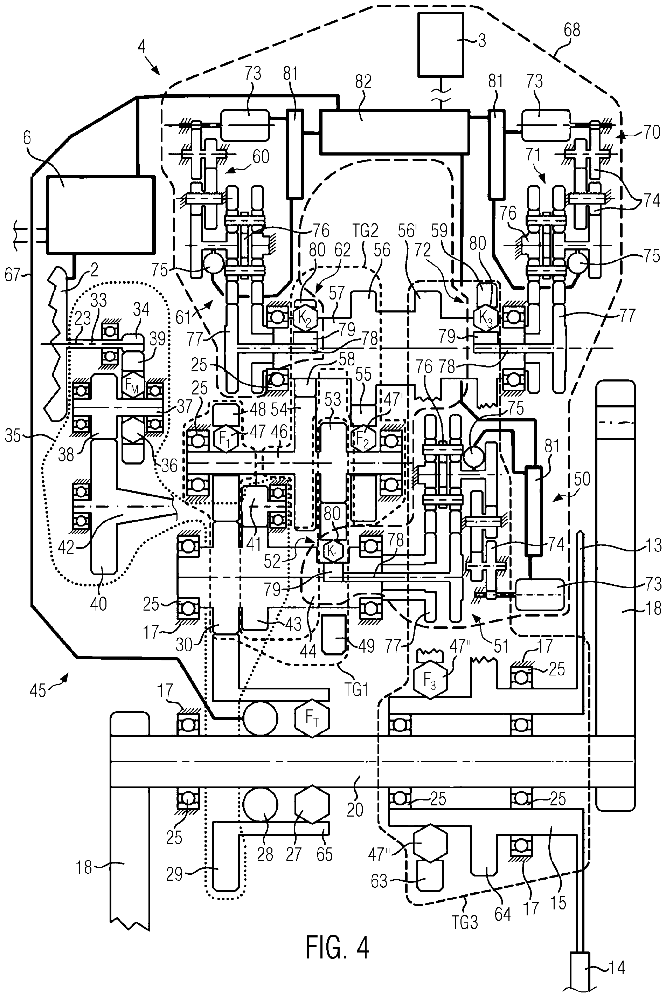

Figur 4 zeigt das Tretlagergetriebe mit Schaltvorrichtung in einer schematischen Darstellung im Schnitt. In dieser Darstellung wurden, zur besseren Übersicht, die Rotationsachsen von sämtlichen Wellen in die Schnittebene gelegt. Ebenso wurde die Einbauposition des Elektromotors für eine bessere Übersicht verändert. Die funktionalen Zusammenhänge und die Bauteile sowie die Bezugszeichen entsprechen Figur 3. Die vom Fahrradfahrer aufgebrachte Antriebsleistung wird über die Tretkurbeln 18 in die Tretlagerwelle 20 eingeleitet. Nachfolgend wird das Drehmoment über einen Freilauf Ft 27 in die Antriebshohlwelle 65 übergeben. In vorteilhafter Ausgestaltung wird Drehmoment, Drehzahl und der absolute Drehwinkel innerhalb einer Sensoranordnung 28 gemessen und über eine Datenleitung 67 an einen Motorcontroller 66 übergeben. Der Freilauf 27 kann vor oder hinter der Sensoranordnung 28 angeordnet sein.

Das Antriebszahnrad 29 befindet sich in Fahrtrichtung links der Mittelebene des Fahrzeugs, ist koaxial zur Tretlagerwelle angeordnet. Alle Zahnräder, die koaxial zur Tretlagerwelle angeordnet sind, haben einen größeren Durchmesser als sämtliche anderen Zahnräder, die von dem Menschen aufgebrachte Antriebsleistung übertragen und nicht koaxial zur Tretlagerwelle angeordnet sind. Diese Anordnung ist vorteilhaft, da auf diese Weise rechts neben dem Antriebszahnrad 29 genügend Bauraum für die Sensoranordnung zur Verfügung steht und weil in dieser Anordnung das Gehäuse 17, wie in Figur 2 beispielhaft gezeigt, nach vorne immer schlanker gestaltet werden kann, um einen formschönen Übergang zum Akku zu erhalten. Das Antriebszahnrad 29 steht mit dem Drehzahlerhöhungsritzel 30 in kämmender Verbindung. Das Drehzahlerhöhungsritzel 30 ist fest verbunden mit der ersten Kupplungswelle 44. Die erste Kupplungswelle 44 ist ebenfalls fest mit dem Motoreinkoppelzahnrad 43 verbunden.

Der Elektromotor 2 besitzt einen Stator 31 und einen Rotor 32, wobei der Rotor 32 seine elektrische Leistung auf eine Motorwelle 33 überträgt. Die Motorwelle 33 ist mit einem Motorritzel 34 verbunden. Das Reduziergetriebe 35 ist vorteilhaft in mehrere Stufen unterteilt. Das Motorritzel 34 steht mit einem Motorritzelrad 39 in Verbindung. Koaxial zum Motorritzelrad 39 ist ein Motorfreilauf 36 angeordnet. Der Motorfreilauf 36 sorgt dafür, dass bei ausgeschaltetem Hilfsantrieb 2 der Motor 2 nicht rotiert und als bremsender Generator läuft. Der Motorfreilauf ist in der Lage, ein Drehmoment auf die Motorfreilaufwelle 37 zu übertragen. Das Motorfreilaufzahnrad 38 ist mit der Motorfreilaufwelle 37 verbunden. Das Motorfreilaufzahnrad 38 kämmt mit der großen Verzahnung 40 des Motorstufenzahnrades 42 und reduziert auf diese Weise die Motordrehzahl weiter. Das Motorstufenzahnrad 42 besitzt eine große Verzahnung 40 und eine kleine Verzahnung 41. Das bereits oben beschriebene Motoreinkoppelzahnrad 43 steht nun wiederum mit dieser kleiner Verzahnung 41 des Motorstufenzahnrades 42 in kämmender Verbindung. Das Motoreinkoppelzahnrad 43 ist mit dem Drehzahlerhöhungsritzel 30 auf der erste Kupplungswelle 44 verbunden. Die erste Kupplungswelle 44 ist der Eingang in die Schaltgetriebebaugruppe 45, die in die drei Teilgetriebe TG1, TG2 und TG3 aufgeteilt ist. Die erste Welle des ersten Teilgetriebes wird durch die erste Kupplungswelle 44 gebildet. Die zweite Welle des ersten Teilgetriebes wird durch die Freilaufwelle 46 gebildet.

Auf der Freilaufwelle 46 befindet sich ein selbstbetätigter Klemmkörperfreilauf 47, der in der Lage ist, ein Drehmoment in einer Drehrichtung von dem Freilaufzahnrad 48 des ersten Teilgetriebes auf die Freilaufwelle 46 zu übertragen. Das Freilaufzahnrad 48 des ersten Teilgetriebes kämmt mit dem Drehzahlerhöhungsritzel 30. In Fahrrichtung rechts von dem Motoreinkoppelzahnrad 43 befindet sich auf der ersten Kupplungswelle 44 gelagert ein erstes Losrad 49 des ersten Teilgetriebes. Dieses erste Losrad 49 kann über einen ersten Aktuator 50, eine erste Betätigungseinrichtung 51 und eine erste Kupplungseinrichtung 52 in eine Richtung drehfest mit der ersten Kupplungswelle verbunden werden. Das erste Losrad 49 des ersten Teilgetriebes kämmt mit dem ersten Freilaufwellenritzel 53. Es ist fest mit der Freilaufwelle 46 verbunden. In der Mitte der Freilaufwelle 46 befindet sich ebenfalls das zweite Freilaufwellenzahnrad 54 des zweiten Teilgetriebes. Das zweite Freilaufwellenzahnrad 54 des zweiten Teilgetriebes ist ebenfalls fest mit der Freilaufwelle 46 verbunden. In Fahrtrichtung rechts vom Freilaufwellenritzel 53 befindet sich ein weiterer selbstbetätigter Klemmkörperfreilauf 47', der das Freilaufzahnrad 55 des zweiten Teilgetriebes in eine Drehrichtung mit der Freilaufwelle 46 verbinden kann. Das Freilaufzahnrad 55 des zweiten Teilgetriebes kämmt mit einem Kupplungswellenritzel 56 des zweiten Teilgetriebes und verbindet die Freilaufwelle 46 mit der zweiten Kupplungswelle 57. Die zweite mögliche Übersetzung innerhalb des zweiten Teilgetriebes wird dadurch gebildet, dass das zweite Freilaufwellenzahnrad 54 mit einem Kupplungswellenzahnrad 58 der zweiten Kupplungswelle 57 kämmt. Dieses Kupplungswellenzahnrad 58 kann über einen zweiten Aktuator 60, eine zweite Betätigungseinrichtung 61 und eine zweite Kupplungseinrichtung 62 in eine Richtung drehfest mit der zweiten Kupplungswelle 57 verbunden werden. In Fahrrichtung rechts von dem Kupplungswellenritzel 56 des zweiten Teilgetriebes befindet sich das Kupplungswellenritzel 59 des dritten Teilgetriebes und kann über einen dritten Aktuator 70, eine dritte Betätigungseinrichtung 71 und eine dritte Kupplungseinrichtung 72 in eine Richtung drehfest mit der zweiten Kupplungswelle 57 verbunden werden. Die zweite Kupplungswelle 57 bildet einen Teil des zweiten und dritten Teilgetriebes. Das Kupplungswellenritzel 56 des zweiten Teilgetriebes ist fest mit der zweiten Kupplungswelle 57 verbunden.

Das dritte Teilgetriebe ist in Figur 4 wie folgt erkennbar: Der Abtrieb wird durch die Abtriebshohlwelle 15 gebildet, die koaxial zur Tretlagerwelle 20 angeordnet ist und mit dem Abtriebszahnrad 13 verschraubt ist. Auf der Abtriebshohlwelle 15 befindet sich Freilaufzahnrad der Abtriebshohlwelle 63 in freigeschnittener Darstellung und kämmt mit dem Kupplungswellenritzel 56. Das Kupplungswellenritzel 56 bildet somit einen Teil des zweiten und einen Teil des dritten Teilgetriebes. Das Freilaufzahnrad der Abtriebshohlwelle 63 ist über einen Klemmkörperfreilauf 47" mit der Abtriebshohlwelle 15 verbunden. In Fahrtrichtung rechts neben dem Freilaufzahnrad der Abtriebshohlwelle 63 befindet sich das Kupplungswellenzahnrad des dritten Teilgetriebes 64, ebenfalls in freigeschnittener Darstellung. Es ist fest mit der Abtriebshohlwelle 15 verbunden.

Innerhalb von Figur 4 wird ebenfalls deutlich, dass sich innerhalb der Schaltvorrichtung bevorzugt die folgenden Baugruppen befinden können:
- erster Aktuator 50,
- erste Betätigungseinrichtung 51,
- erste Kupplungseinrichtung 52,
- zweiter Aktuator 60,
- zweite Betätigungseinrichtung 61,
- zweite Kupplungseinrichtung 62,
- dritter Aktuator 70,
- dritte Betätigungseinrichtung 71,
- dritte Kupplungseinrichtung 72.

Der Aktuator besteht in der Darstellung beispielhaft in guter Ausgestaltung aus einem einem hoch drehenden, elektrisch betriebenen, Aktuatormotor 73, wobei seine Drehzahl über ein Aktuatorreduziergetriebe 74 mit einem Faktor größer 200 gesenkt wird, um das Drehmoment, welches zum Schalten benötigt wird, zu erhöhen. Sämtliche Aktuatoren 50,60,70 können von einer Datenverarbeitungsvorrichtung 82, insbesondere über jeweils eine Aktuatoransteuerelektronik 81, zum Schalten der Gangstufen bewegt werden. Jeder Aktuator 50,60,70 besitzt eine momentane Lage oder einen momentane Winkelposition, die mit Hilfe eines Positionssensors 75 ermittelt wird. Der Positionssensor 75 übergibt Daten an seine jeweilige Aktuatoransteuerelektronik, die repräsentativ sind für seine aktuelle Lage oder seine aktuelle Position.

Die Aktuator-Daten werden an die Datenverarbeitungsvorrichtung 82 übergeben. Zusätzlich erhält die Datenverarbeitungsvorrichtung 82 ggfl. weitere Daten wie zum Beispiel die aktuelle Trittfrequenz, das aktuelle Drehmoment vom Fahrradfahrer und vom Motor, einer zweiten Datenverarbeitungsvorrichtung 66. In Abhängigkeit von diesen und weiteren Befehlen und Signalen, die die Datenverarbeitungsvorrichtung 82 mit dem Bedienelement 5 austauscht, ist sie in der Lage, die Kupplungen K1, K2 und K3 gesteuert oder geregelt zu aktivieren oder zu deaktivieren. Als Option zu den hier dargestellten elektrischen Aktuatormotoren ist optional auch die Verwendung von Aktuatorantrieben möglich, die ihre Energie aus einem pneumatischen, hydraulischen oder mechanischen Speicher beziehen. Die Energie kann ebenfalls durch den Fahrradfahrer aufgebracht werden. In diesem Fall können auch die Datenverarbeitungsvorrichtung 82 und das Bedienelement 3 mechanisch, hydraulisch oder pneumatisch arbeiten. Auch sind in bestimmten Anwendungen Mischformen von diesen Prinzipien sinnvoll.

Allgemein formuliert zeigt Figur 4 die Getriebeeinheit 4 mit einer Schaltvorrichtung 68 für ein Fahrrad mit Hilfsantrieb 2, mit drei Teilgetrieben TG1, TG2 und TG3, die zur Kraftübertragung in Reihe geschaltet sind.

Das erste Teilgetriebe TG1 weist eine erste Kupplungswelle 44 auf, an der ein Losrad 49 gelagert ist. Es bildet mit dem Freilaufwellenritzel 53 ein Radpaar innerhalb des ersten Teilgetriebes TG1. Das erste Losrad 49 ist mittels der Kupplung K1 mit der Kupplungswelle 44 verbindbar, um eine Gangstufe in diesem ersten Teilgetriebe TG1 in Betrieb zu setzen. Diese erste Kupplung K1 wird von einer ersten Betätigungseinrichtung 51 betätigt. Ebenfalls befindet sich innerhalb des ersten Teilgetriebes TG1 ein Freilauf F1, der das Freilaufzahnrad 48 mit der Freilaufwelle 46 in eine Richtung drehfest verbindet.

Das zweite Teilgetriebe TG2 weist eine zweite Kupplungswelle 57 auf, an der ein Losrad 58 gelagert ist. Es bildet mit dem zweiten Freilaufwellenritzel 54 ein Radpaar innerhalb des zweiten Teilgetriebes TG2. Das zweite Losrad 58 ist mittels der Kupplung K2 mit der Kupplungswelle 57 verbindbar, um eine Gangstufe in diesem zweiten Teilgetriebe TG2 in Betrieb zu setzen. Diese zweite Kupplung K2 wird von einer zweiten Betätigungseinrichtung 61 betätigt. Ebenfalls befindet sich innerhalb des zweiten Teilgetriebes TG2 ein Freilauf F2, der das Freilaufzahnrad 55 mit der Freilaufwelle 46 in eine Richtung drehfest verbindet.

Das dritte Teilgetriebe TG3 weist eine zweite Kupplungswelle 57 auf, an der ein Losrad 59 gelagert ist. Es bildet mit dem Kupplungswellenzahnrad 64 ein Radpaar innerhalb des dritten Teilgetriebes TG3. Das zweite Losrad 59 ist mittels der Kupplung K3 mit der Kupplungswelle 57 verbindbar, um eine Gangstufe in diesem dritten Teilgetriebe TG3 in Betrieb zu setzen. Diese dritte Kupplung K3 wird von einer dritten Betätigungseinrichtung 71 betätigt. Ebenfalls befindet sich innerhalb des dritten Teilgetriebes TG2 ein Freilauf F3, der das Freilaufzahnrad 63 mit der Abtriebswelle 15 in eine Richtung drehfest verbindet. Die Abtriebshohlwelle 15 bildet somit eine Welle des dritten Teilgetriebes TG3.

Die erste, zweite und dritte Betätigungseinrichtung 51,61,71 stehen mittelbar mit drei Aktuatoren 50,60,70 in Verbindung. Diese Ausführung ist nur beispielhaft. Es sind ebenfalls Ausgestaltungen der Betätigungseinrichtungen möglich, die nur zwei oder gar nur einen Aktuator verbaut sind.

Die Datenverarbeitungsvorrichtung 82 kann als integraler Bestandteil der Schaltvorrichtung 68 mindestens einen der folgenden fünf Prozesse innerhalb der Betätigungseinrichtungen 51,61,71 ablaufen lassen:
1) Die Datenverarbeitungsvorrichtung 82 kann innerhalb von ausgewählten Zeiträumen die Betätigungseinrichtungen zeitweise gleichzeitig bewegen, um einen Schaltvorgang von einem Gang in einen anderen Gang zu vollziehen.
2) Die Datenverarbeitungsvorrichtung 82 kann ebenfalls innerhalb von anderen ausgewählten Zeiträumen nur einzelne Betätigungseinrichtungen bewegen, um einen Schaltvorgang von einem Gang in einen anderen Gang zu vollziehen.
3) Die Datenverarbeitungsvorrichtung 82 in der Lage, die unterschiedlichen Betätigungseinrichtungen relativ zueinander mit einem zeitlichen Versatz oder einer unterschiedlichen Geschwindigkeit zu bewegen, um einen Schaltvorgang von einem Gang in einen anderen Gang zu vollziehen.
4) Die Datenverarbeitungsvorrichtung 82 in der Lage, dass sie den zeitlichen Versatz oder die Geschwindigkeit an den unterschiedlichen Betätigungseinrichtungen zusätzlich in Abhängigkeit von der Schaltrichtung variieren kann. Als Schaltrichtung "nach unten " bezeichnet der Schaltvorgang von einem hohen in einen niedrigen Gang und als "nach oben" bezeichnet man den Schaltvorgang von einem niedrigen in einen hohen Gang.
5) Die Datenverarbeitungsvorrichtung 82 in der Lage, dass sie den den zeitlichen Versatz oder die Geschwindigkeit an den unterschiedlichen Betätigungseinrichtungen zusätzlich in Abhängigkeit von der momentan eingelegten Gangstufe variieren kann.

Damit die oben genannten Prozesse ablaufen können, ist es vorteilhaft, wenn die Getriebeeinheit 4 dadurch gekennzeichnet ist, dass innerhalb der Schaltvorrichtung 68 die Betätigungseinrichtungen 51,61,71 mittelbar jeweils einer Sensoreinrichtung 75 verbunden sind, wobei die Sensoreinrichtung 75 ausgestaltet ist, Daten an eine Datenverarbeitungsvorrichtung 82 zu übergeben oder mit ihr auszutauschen, die repräsentativ sind für einen momentanen Zustand der jeweiligen Betätigungseinrichtung 51,52,53. Diese Übergabe oder dieser Austausch kann auch mittelbar über eine Aktuatoransteuerelektronik 81 erfolgen.

Hier in Figur 4 ist gut erkennbar, dass die Getriebeeinheit 4 dadurch gekennzeichnet ist, dass innerhalb der Schaltvorrichtung 68 jede der drei Betätigungseinrichtungen 51, 61, 71 von genau einem Aktuator 50, 60, 70 bewegt wird. Ebenfalls ist gut sichtbar, dass jede Betätigungseinrichtung 51, 61, 71 genau eine Kupplungseinrichtung 52, 62, 72 bewegt.Die Kupplungseinrichtungen 52, 62, 72 sind hier beispielhaft so ausgeführt, das jeweils ein schwenkbares Auflager 78 jeweils einen Übertragungszahn 79 in eine Innenverzahnung 80 einschwenken kann, um als schaltbare Freilaufkupplung die Welle gegenüber dem zahnrad zu kuppeln. Somit ist hier die Getriebeeinheit 4 dadurch gekennzeichnet, dass innerhalb der Schaltvorrichtung 68 jede Kupplungseinrichtung 52,62,72 ausschließlich eine einzelne Kupplung K1, K2, K3 in unterschiedliche Zustände versetzt.

Ebenfalls erkennt man hier in Figur 4, dass die Getriebeeinheit 4 dadurch gekennzeichnet ist, dass sie einen Elektromotor 2 aufweist, dessen Drehmoment mittelbar in eine erste Kupplungswelle 44 eingeleitet wird, wobei das Drehzahlerhöhungsritzel 30 ebenfalls fest mit dieser Kupplungswelle 44 verbunden ist und das Drehzahlerhöhungsritzel 30 als Teil des ersten Teilgetriebes TG1 mit dem Antriebszahnrad 29 in Verbindung steht, welches koaxial zur Tretlagerwelle 20 angeordnet ist. Das Antriebszahnrad 29 ist aus Sicherheitsgründen über einen Freilauf mit der Tretlagerwelle 20 verbunden, damit der Antriebsmotor 2, auch in fehlerhaften Betriebssituationen, niemals die Beine des Fahrradfahrers antrieben kann.

Man erkennt hier innerhalb von Figur 4, dass auf sämtlichen Wellen, auf denen eine schaltbare Kupplung angeordnet ist, kein zusätzlicher Freilauf angeordnet ist. Ebenfalls erkennt man, dass die zweite Kupplungswelle 57 nicht nur die Kupplungswelle des zweiten Teilgetriebes bildet, sondern auch im rechten Bereich die Kupplungswelle des dritten Teilgetriebes bildet. Allgemein formuliert ist hier eine Welle aus einem Teilgetriebe zu einer weiteren Welle aus einem weiteren Teilgetriebe koaxial angeordnet oder mit dieser insbesondere in einem Stück einteilig gefertigt ist. In diesem vorteilhaften Aufbau erkennt man ebenfalls, dass das Ritzel 56 als Zahnrad im zweiten und dritten Teilgetriebe arbeitet und fest mit der Welle verbunden ist.

In Figur 3 ist erkennbar, dass es sogar möglich ist, diese zwei Zahnräder in einem Bauteil zu vereinen. Allgemein formuliert wird hier ein Zahnrad aus einem ersten Teilgetriebe, zu einem Zahnrad aus einem zweiten Teilgetriebe koaxial angeordnet und insbesondere mit diesem in einem Stück verbunden. Alle diese oberhalb genannten Kriterien verschaffen diesem vorteilhaften Aufbau genügend Bauraum für die Vielzahl der notwendigen Betätigungseinrichtungen.

Man erkennt ebenfalls in Figur 4, dass jede Betätigungseinrichtung 51, 61, 71 mit jeweils einer Kupplungseinrichtung 52, 62, 72 und jeweils einem Aktuator 50, 60, 70 verbunden ist, wobei jeder Aktuator mindestens aus einem Elektromotor 73 und einem mehrstufigen Getriebe, hier Aktuatorreduziergetriebe 74 genannt, besteht, wobei das Getriebe die Drehzahl des Elektromotors 73 mindestens um den Faktor 100 reduziert. Auf diese Weise kann das zum Kuppeln benötigte Drehmoment erhöht werden und über das Überlagerungsgetriebe 76 und weitere Übertragungsbauteile 77, welche hier Teile der Betätigungseinrichtung bilden, auf die rotierenden Wellen der Teilgetriebe übergeben werden. Eine ausführliche Beschreibung dieser beispielhaften Betätigungseinrichtung ist der DE102022001739.3 zu entnehmen. Andere Betätigungseinrichtungen sind im Rahmen dieser Erfindung ebenfalls anwendbar. Vorteilhaft ist in dieser beispielhaften Ausführung gemäß Figur 3 und 4, das die Getriebeeinheit 4 dadurch gekennzeichnet ist, dass eine Vielzahl von Betätigungseinrichtungen 51, 61, 71 mittelbar von drei Elektromotoren 73 bewegt werden, wobei der jeweilige Elektromotor 73 mittelbar von einer Datenverarbeitungsvorrichtung 82 gesteuert oder geregelt wird.

Man erkennt ebenfalls in Figur 3 und 4, dass die Getriebeeinheit 4 in dieser beispielhaften Ausgestaltung dadurch gekennzeichnet ist, der Hilfsantrieb 2 als Elektromotor 2 ausgeführt ist, wobei das Motordrehmoment über einen Freilauf 36 in das Schaltgetriebe eingeleitet wird, wobei der Freilauf 36 nicht koaxial zu irgendeiner Welle sämtlicher Teilgetriebe TG1, TG2 und TG3 angeordnet ist. Der Freilauf 36 sorgt dafür, dass bei abgeschaltetem Hilfsantrieb 4, der Fahrradfahrer den Hilfsantrieb 4 nicht als Generator betreibt, was zu einer Bremswirkung führen würde. Zusätzlich ist anzumerken, das der Freilauf 36 an dieser Stelle klein und leicht ausgeführt werden kann, da er mit relativ hoher Drehzahl betrieben wird.

### Bezugszeichen

- 1: Fahrrad
- 2: Hilfsmotor, Hilfsantrieb, Elektromotor
- 3: Bedienelement
- 4: Getriebeeinheit, insbesondere Trelagergetriebe
- 5: Bedienelement
- 6: Tretlager
- 7: Sitzrohr
- 8: Hinterradnabe
- 9: Haltevorrichtung
- 10: Pedalantrieb
- 11: Unterrohr
- 12: Hinterrad
- 13: Abtriebszahnrad
- 14: Zugmittel
- 15: Abtriebshohlwelle
- 16: Pedale
- 17: Gehäuse
- 18: Tretkurbel
- 19: Drehachse
- 20: Tretlagerwelle
- 21: Mittelebene.
- 22: Akku
- 23: Rotationsachse des Elektromotors
- 24: Schwinge
- 25: Kugellager
- 26: Wellendichtring
- 27: Tretlagerfreilauf
- 28: Sensoranordnung am Tretlager
- 29: Antriebszahnrad, Drehzahlerhöhungsrad
- 30: Drehzahlerhöhungsritzel
- 31: Stator
- 32: Rotor
- 33: Motorwelle
- 34: Motorritzel
- 35: Reduziergetriebe
- 36: Motorfreilauf
- 37: Motorfreilaufwelle
- 38: Motorfreilaufzahnrad
- 39: Motorritzelrad
- 40: große Verzahnung des Motorstufenzahnrades
- 41: kleine Verzahnung des Motorstufenzahnrades
- 42: Motorstufenzahnrades
- 43: Motoreinkoppelzahnrad
- 44: erste Kupplungswelle
- 45: Schaltgetriebebaugruppe
- 46 46': Freilaufwelle
- 47 47' 47": selbstbetätigter Klemmkörperfreilauf
- 48: Freilaufzahnrad des ersten Teilgetriebes
- 49: erstes Losrad des ersten Teilgetriebes
- 50: erster Aktuator
- 51: erste Betätigungseinrichtung
- 52: erste Kupplungseinrichtung
- 53: erstes Freilaufwellenritzel
- 54: zweite Freilaufwellenzahnrad des zweiten Teilgetriebes
- 55: Freilaufzahnrad des zweiten Teilgetriebes
- 56 56': Kupplungswellenritzel des zweiten Teilgetriebes
- 57 57': zweite Kupplungswelle
- 58: Kupplungswellenzahnrad des zweiten Teilgetriebes, Losrad
- 59: Kupplungswellenritzel des dritten Teilgetriebes
- 60: zweiter Aktuator
- 61: zweite Betätigungseinrichtung
- 62: zweite Kupplungseinrichtung
- 63: Freilaufzahnrad der Abtriebshohlwelle
- 64: Kupplungswellenzahnrad des dritten Teilgetriebes
- 65: Antriebshohlwelle
- 66: Motorelektronik ; Controller für Hilfsantrieb
- 67: Signalleitung
- 68: Schaltvorrichtung
- 70: dritter Aktuator
- 71: dritte Betätigungseinrichtung
- 72: dritte Kupplungseinrichtung
- 73: Aktuatormotor, Elektromotor
- 74: Aktuatorreduziergetriebe, Getriebe
- 75: Positionssensor, Sensorvorrichtung
- 76: Überlagerungsgetriebe
- 77: Übertragungsbauteile
- 78: schwenkbare Auflager
- 79: Übertragungszahn, Kupplungsklinke
- 80: Innenverzahnung
- 81: Ansteuerelektronik Aktuator
- 82: Datenverarbeitungsvorrichtung
- K1: Kupplung 1
- K2: Kupplung 2
- K3: Kupplung 3
- Ft: Tretlagerfreilauf
- Fm: Motorfreilauf
- F1: Freilauf 1
- F2: Freilauf 2
- F3: Freilauf 3
- TG1: Teilgetriebe 1
- TG2: Teilgetriebe 2
- TG3: Teilgetriebe 3
- α: Winkel zwischen zwei Ebenen

## Patentansprüche

1. Getriebeeinheit (4) mit einer Schaltvorrichtung (68) für ein mit Muskelkraft angetriebenes Fahrzeug, insbesondere einem Fahrrad (1) mit oder ohne Hilfsantrieb, mit einem ersten Teilgetriebe (TG1) und mindestens einem zweiten Teilgetriebe (TG2), die zur Kraftübertragung in Reihe geschaltet sind,
wobei das erste Teilgetriebe (TG1) eine Welle (44) aufweist, an der mindestens ein oder eine Mehrzahl von ersten Losrädern (49) gelagert sind, die mit entsprechenden Zahnrädern (53) Radpaare des ersten Teilgetriebes bilden,
wobei die ersten Losräder oder das erste Losrad (49) mittels der ersten Kupplungen oder der ersten Kupplung (K1) mit der Welle (44) verbindbar sind, um eine Gangstufen des ersten Teilgetriebes (TG1) in Betrieb zu setzen,
wobei die ersten Kupplungen oder die erste Kupplung (K1) mittelbar oder unmittelbar von einer ersten Betätigungseinrichtung (51) betätigt werden kann,
und wobei sich innerhalb des ersten Teilgetriebes (TG1) ein Freilauf (F1) befindet, der ein Zahnrad (48) mittelbar oder unmittelbar mit einer der Wellen (46) in eine Richtung drehfest verbindet,
wobei das zweite Teilgetriebe (TG2) eine Welle (57) aufweist, an der mindestens ein oder eine Mehrzahl von zweiten Losrädern (58) gelagert sind, die mit entsprechenden Zahnrädern (54) Radpaare des zweiten Teilgetriebes bilden, wobei die zweiten Losräder oder das zweite Losrad (58) mittels der zweiten Kupplungen oder der zweiten Kupplung (K2) mit der Welle (57) verbindbar sind, um eine Gangstufe des zweiten Teilgetriebes (TG2) in Betrieb zu setzen,
wobei die mindestens zweiten Kupplungen oder die mindestens zweite Kupplung (K2) mittelbar oder unmittelbar von mindestens einer zweiten Betätigungseinrichtung (61) betätigt werden kann,
wobei sich innerhalb des zweiten Teilgetriebes (TG2) ein Freilauf (F2) befindet, der ein Zahnrad (55) mittelbar oder unmittelbar mit einer der Wellen (46) in eine Richtung drehfest verbindet,
wobei die erste und mindestens die zweite Betätigungseinrichtung (51,61) als Teil der Schaltvorrichtung (68) mittelbar oder unmittelbar mit mindestens einem elektrisch betriebenen Aktuator (50) in Verbindung steht und mindestens durch eines der folgenden Merkmale gekennzeichnet ist:
- innerhalb von ausgewählten Zeiträumen bewegt die Schaltvorrichtung (68) die mindestens zwei Betätigungseinrichtungen (51,61) mindestens zeitweise gleichzeitig, um einen Schaltvorgang von einem Gang in einen anderen Gang zu vollziehen;
- innerhalb von anderen ausgewählten Zeiträumen bewegt die Schaltvorrichtung (68) nur einzelne Betätigungseinrichtungen (51,61), um einen Schaltvorgang von einem Gang in einen anderen Gang zu vollziehen;
- die Schaltvorrichtung (68) bewegt die Betätigungseinrichtungen (51,61) relativ zueinander mit einem zeitlichen Versatz oder einer unterschiedlichen Geschwindigkeit, um einen Schaltvorgang von einem Gang in einen anderen Gang zu vollziehen;
- eine Betätigungseinrichtung (51,61) ist mittelbar oder unmittelbar mit einer Sensoreinrichtung (75) verbunden, wobei die Sensoreinrichtung (75) ausgestaltet ist, Signale an eine Datenverarbeitungsvorrichtung (82) zu übergeben oder mit ihr auszutauschen, die repräsentativ sind für einen momentanen Zustand der Betätigungseinrichtung (51,61);
- eine Datenverarbeitungsvorrichtung (82) ist mittelbar oder unmittelbar mit mindestens einem Aktuator (50) verbunden, wobei die Datenverarbeitungsvorrichtung (82) ausgestaltet ist, elektrische Signale oder elektrische Leistung an den Aktuator (50) zu übergeben oder mit ihm auszutauschen;
- eine Datenverarbeitungsvorrichtung (82) ist mittelbar oder unmittelbar mit mindestens einem Bedienelement (3) verbunden, wobei das Bedienelement (3) ausgestaltet ist, mindestens bei Inbetriebnahme der Getriebeeinheit (4) Befehle vom Fahrradfahrer zu erhalten.

2. Getriebeeinheit (4) nach Anspruch 1, wobei innerhalb der Schaltvorrichtung (68) mindestens zwei Betätigungseinrichtungen (51,61) mittelbar oder unmittelbar mit jeweils einer Sensoreinrichtung (75) verbunden sind, wobei die Sensoreinrichtung (75) ausgestaltet ist, Signale an eine Datenverarbeitungsvorrichtung (82) zu übergeben oder mit ihr auszutauschen, die repräsentativ sind für einen momentanen Zustand der jeweiligen Betätigungseinrichtung (51,61).

3. Getriebeeinheit (4) nach Anspruch 1 oder 2, wobei innerhalb der Schaltvorrichtung (68) jede Betätigungseinrichtung (51, 61) von genau einem Aktuator (50, 60) bewegt wird.

4. Getriebeeinheit (4) nach einem der Ansprüche 1 bis 3, wobei innerhalb der Schaltvorrichtung (68) jede Betätigungseinrichtung (51,61) genau eine Kupplungseinrichtung (52, 62) bewegt und jede Kupplungseinrichtung (52, 62) ausschließlich eine einzelne Kupplung (K1, K2) in unterschiedliche Zustände versetzt.

5. Getriebeeinheit (4) nach einem der Ansprüche 1 bis 4, wobei die Getriebeeinheit (4) einen Hilfsantrieb (2), insbesondere einen Elektromotor (2), aufweist, dessen Drehmoment mittelbar oder unmittelbar in eine Welle (44) oder ein Zahnrad (43) des ersten Teilgetriebes (TG1) einleitbar ist, wobei mindestens ein Zahnrad (30) dieses ersten Teilgetriebes (TG1) mit einem weiteren Zahnrad (29) in Verbindung steht, welches koaxial zur Tretlagerwelle (20) angeordnet ist

6. Getriebeeinheit (4) nach Anspruch 5, wobei das Zahnrad (29), welches koaxial zur Tretlagerwelle (20) angeordnet ist, im Durchmesser größer ist als das Zahnrad (30) aus dem ersten Teilgetriebe (TG1), mit welchem es in kämmender Verbindung steht und wobei es in Fahrtrichtung links in Bezug auf die Mittelebene des Fahrrades (1) angeordnet ist und wobei die Mittelebene des Fahrrades (1) in der Mitte des Fahrzeugs angeordnet ist und immer senkrecht steht zur Rotationsachse der Tretlagerwelle (20).

7. Getriebeeinheit (4) nach Anspruch 5 oder 6, wobei das Zahnrad (29), welches koaxial zur Tretlagerwelle (20) angeordnet ist, mit der Tretlagerwelle (20) über einen Freilauf (27) in Verbindung steht.

8. Getriebeeinheit (4) nach einem der Ansprüche 5 bis 7, wobei das Zahnrad (29), welches koaxial zur Tretlagerwelle (20) angeordnet ist, mit der Tretlagerwelle (20) über eine Sensoranordnung (28) in Verbindung steht, wobei die Sensoreinrichtung (28) ausgestaltet ist, Signale zu erzeugen und an eine Datenverarbeitungsvorrichtung (82) zu übergeben oder mit ihr auszutauschen, die repräsentativ sind für einen momentanen Zustand der Tretlagerwelle (20), insbesondere das durch den Fahrer aufgebrachte Drehmoment, die Drehzahl oder den Drehwinkel an der Tretlagerwelle (20).

9. Getriebeeinheit (4) nach einem der Ansprüche 1 bis 8, wobei ein Zahnrad (56) aus einem ersten Teilgetriebe (TG2) zu einem Zahnrad (56') aus einem zweiten Teilgetriebe (TG3) koaxial angeordnet ist, insbesondere mit diesem in einem Stück verbunden ist.

10. Getriebeeinheit (4) nach Anspruch 9, wobei ein Zahnrad (53) aus einem ersten Teilgetriebe (TG1) zu einem Zahnrad 54 und einer Welle (46, 46') aus einem zweiten Teilgetriebe koaxial angeordnet und in einem Stück verbunden ist.

11. Getriebeeinheit (4) nach einem der Ansprüche 1 bis 10 und mit Anspruch 8, wobei sich die Sensoranordnung (28) in Fahrtrichtung links von der Abtriebshohlwelle (15) befindet, welche koaxial zur Tretlagerwelle (20) angeordnet ist und aus dem Gehäuse (17) herausgeführt wird.

12. Getriebeeinheit (4) nach einem der Ansprüche 1 bis 11 und mit Anspruch 8, wobei die Sensoranordnung (28) in Fahrtrichtung rechts von dem Zahnrad (29) befindet, welche koaxial zur Tretlagerwelle (20) angeordnet ist.

13. Getriebeeinheit (4) nach einem Ansprüche 1 bis 12, wobei mindestens zwei Zahnräder (63,64) aus einem Teilgetriebe (TG3) mittelbar oder unmittelbar mit der Abtriebshohlwelle (15) verbunden und koaxial angeordnet sind, wobei die Abtriebshohlwelle (15) koaxial zur Tretlagerwelle (20) angeordnet und aus dem Gehäuse (17) herausgeführt ist.

14. Getriebeeinheit (4) nach einem der Ansprüche 1 bis 13, wobei der Winkel (α) zwischen einer ersten Ebene und einer zweiten Ebene kleiner als 90 Grad, insbesondere kleiner als 70 Grad, beträgt, wobei die Rotationsachsen der Tretlagerwelle (20) und die Rotationsachsen sämtlicher Wellen (44, 46, 57) in jedem Teilgetriebe (TG1, TG2, TG3) parallel sind und eine erste Ebene, die durch die erste Rotationsachse von einer ersten Welle eines ersten Teilgetriebes und der Achse der Tretlagerwelle (20) aufgespannt wird, einen Winkel α zu einer zweiten Ebene besitzt, die durch eine zweite Rotationsachse von einer zweiten Welle eines zweiten Teilgetriebes und der Achse der Tretlagerwelle (20) aufgespannt wird.

15. Getriebeeinheit (4) nach Anspruch 13 oder 14, **dadurch gekennzeichnet, dass** mindestens eins der zwei Zahnräder (63, 64), die koaxial zur Abtriebshohlwelle (15) angeordnet sind, mit der Abtriebshohlwelle (15) über einen Freilauf (47") verbunden ist.
